(19) Europäisches Patentamt
European Patent Office
Office européen des brevets

(11) EP 4 201 989 B1

(12) **EUROPEAN PATENT SPECIFICATION**

(45) Date of publication and mention of the grant of the patent:
**06.08.2025 Bulletin 2025/32**

(21) Application number: **21858223.7**

(22) Date of filing: **11.08.2021**

(51) International Patent Classification (IPC):
***C08K 5/32*** (2006.01) ***C08K 5/3492*** (2006.01)
***C08L 23/00*** (2006.01) ***C08J 9/16*** (2006.01)

(52) Cooperative Patent Classification (CPC):
(C-Sets available)
**C08J 9/0066; C08J 9/0019; C08J 9/0095; C08J 9/18; C08J 9/232;** C08J 9/0028; C08J 9/122; C08J 2203/06; C08J 2323/02; C08J 2323/16; C08K 3/04; C08K 3/32; C08K 3/346; C08K 5/01; C08K 5/06; (Cont.)

(86) International application number:
**PCT/JP2021/029587**

(87) International publication number:
**WO 2022/039076 (24.02.2022 Gazette 2022/08)**

(54) **POLYOLEFIN-BASED RESIN FOAMED PARTICLES AND POLYOLEFIN-BASED RESIN FOAM MOLDED ARTICLE**

GESCHÄUMTE PARTIKEL AUS HARZ AUF POLYOLEFINBASIS UND FORMKÖRPER AUS HARZSCHAUMSTOFF AUF POLYOLEFINBASIS

PARTICULES EXPANSÉES DE RÉSINE À BASE DE POLYOLÉFINE ET ARTICLE MOULÉ EN MOUSSE DE RÉSINE À BASE DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2020 CN 202010836622**

(43) Date of publication of application:
**28.06.2023 Bulletin 2023/26**

(73) Proprietor: **Kaneka Corporation**
**Osaka-shi, Osaka 530-8288 (JP)**

(72) Inventors:
- **GUAN, Zhanshi**
  **Suzhou, Jiangsu 215024 (CN)**
- **SUN, Yuchen**
  **Suzhou, Jiangsu 215024 (CN)**

(74) Representative: **Vossius & Partner**
**Patentanwälte Rechtsanwälte mbB**
**Siebertstraße 3**
**81675 München (DE)**

(56) References cited:
**WO-A1-2010/119670**
**WO-A1-2010/125893**
**CN-A- 107 286 479**
**CN-A- 111 234 373**
**JP-A- 2004 263 033**
**JP-A- 2007 031 707**
**JP-A- 2011 506 723**
**JP-A- 2013 539 495**
**JP-A- 2019 529 680**
**US-A1- 2010 324 182**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 201 989 B1

(52) Cooperative Patent Classification (CPC): (Cont.)
C08K 5/34926; C08K 5/34928; C08K 13/02

C-Sets
C08K 3/04, C08L 23/10;
C08K 3/32, C08L 23/10;
C08K 3/346, C08L 23/10;
C08K 5/01, C08L 23/10;
C08K 5/06, C08L 23/10;
C08K 5/34926, C08L 23/10;
C08K 5/34928, C08L 23/10;
C08K 13/02, C08L 23/10

## Description

Technical Field

The present invention relates to the field of polymeric foamed materials, in particular, to polyolefin-based resin expanded particles, a polyolefin-based resin foamed molded product obtained by in-mold molding of the polyolefin-based resin expanded particles, and use thereof.

Background Art

An in-mold foamed molded product is obtained by filling a mold for in-mold foam molding with polyolefin-based resin expanded particles prepared by expansion of polyolefin-based resin particles, and heating and fusing the polyolefin-based resin expanded particles. Such an in-mold foamed molded product has characteristics such as the property of being formed into any shape, the property of being lightweight, and a heat insulating property. Further, a polyolefin-based resin in-mold foamed molded product is more excellent in chemical resistance, heat resistance, and strain recovery rate after compression than a polystyrene-based resin in-mold foamed molded product that is obtained with use of polystyrene-based resin expanded particles. Therefore, a polyolefin-based resin in-mold foamed molded product has various uses such as cushioning materials, returnable containers, heat insulating materials, and automotive components.

Although having excellent characteristics described above, a polyolefin-based resin in-mold foamed molded product has the drawback of being flammable. In particular, a foamed molded product has higher flammability than a non-foamed molded product, and has the drawback of burning easily. Recently, there have been demands that automotive components, building materials, and electrical appliance components should have flame retardancy and a self-extinguishing property. In order for these demands to be met, studies to obtain a foamed molded product to which flame retardancy is imparted are being widely conducted. It is common practice to add a flame retardant, and various flame retardants such as halogen-containing compounds, hydrated metal oxides, phosphate esters, nitrogen-containing compounds are used as the flame retardant of a polyolefin-based resin.

Patent Literature 1 discloses, in an example, an in-mold foamed molded product that, due to addition of a sterically-hindered amine ether flame retardant, which is a non-halogen flame retardant, to polyolefin-based resin pre-expanded particles, meets HF-1 of the UL94 horizontal test for a foamed product without occurrence of a problem such as a decrease in in-mold foam moldability.

Patent Literature 2 discloses an in-mold foamed molded product that is determined to be self-extinguishing in a burning test compliant with FMVSS302 and that has a desired color shade of black, due to use of the same flame retardant.

Patent Literature 3 discloses flame-retardant polyolefin-based resin pre-expanded particles that contain a halogen-containing, pentavalent phosphate compound.

Patent Literature 4 indicates that by using a polyolefin-based resin composition containing a sterically-hindered amine ether flame retardant and a non-halogen phosphate ester to obtain polyolefin-based resin pre-expanded particles, a favorable in-mold foam moldability is ensured and more excellent flame retardancy is exhibited than ever.

Patent Literature 5 indicates that by employing a particular phosphorus flame retardant, flame retardancy is proved to be favorable in a burn test method compliant with FMVSS302 even when a sterically-hindered amine ether compound is not used or used in a small amount.

Patent Literature 6 discloses polyolefin-based resin pre-expanded particles obtained by mixing a hindered amine and an organic phosphorous compound in a particular weight ratio.

Incidentally, a great number of studies on flame retardancy of non-foamed polyolefin materials are also being conducted at present. For example, Patent Literature 7 indicates that a polyolefin composition having high flame retardancy can pass the UL94V-2 test, the polypropylene composition being obtained by putting a predetermined amounts of polypropylene, a salt of hypophosphorous acid, melamine hydrobromide, a flame retardant synergist, etc. into a high-speed mixer, stirring the introduced raw materials until the introduced raw materials are uniformly mixed, then pelletizing a resultant mixture through extrusion with use of a twin-screw extruder, and lastly injection molding a resultant pellets with use of an injection molding machine. However, achieving flame retardancy is more difficult in foamed polyolefin materials than in a polyolefin film, a polyolefin tube, or non-foamed polyolefin material. Methods suitable for non-foamed polyolefin materials are not necessarily suitable for the foamed form of the same polymer. The production process of polyolefin-based resin expanded particles and an in-mold foamed molded product of the same includes the steps of impregnating a blowing agent, heating, abruptly releasing pressure, and heating by steam. This causes concern about degradation of a flame retardant and/or reaction due to mixing of a flame retardant. In addition, the presence of a further additive could affect the moldability of a foamed material in such a manner that an end product cannot meet the requirements for foamed products in the relevant field of industry.

Patent Literature 8 discloses in example 7 polyolefin-based resin expanded particles comprising 100 resin parts of polypropylene resin; aluminum hypophosphite in an amount of 15 parts by weight relative to 100 parts by weight of the

polypropylene resin; and melamine in an amount of 5 parts by weight relative to 100 parts by weight of the polypropylene resin.

Citation List

[Patent Literature]

[Patent Literature 1]
WO2003/048239A1
[Patent Literature 2]
Japanese Patent Application Publication, Tokukai, No. 2004-263033
[Patent Literature 3]
Japanese Patent Application Publication, Tokukaihei, No. 9-227711
[Patent Literature 4
WO2010/119670A1
[Patent Literature 5]
WO2013/022049A1
[Patent Literature 6]
WO2016/052739A1
[Patent Literature 7]
CN105694221A
[Patent Literature 8]
CN 111 234 373 A

Summary of Invention

Technical Problem

However, the conventional techniques as described above are not sufficient from the viewpoint of flame retardancy, and are susceptible to further improvement.
An embodiment of the present invention have been made in view of the above problems, and an object thereof is to provide novel polyolefin-based resin expanded particles and a novel polyolefin-based resin foamed molded product that are excellent in flame retardancy.
An object of another embodiment of the present invention is to provide an interior decorating material for public transportation in which the above polyolefin-based resin foamed molded product is used.

Solution to Problem

Specifically, polyolefin-based resin expanded particles in accordance with an embodiment of the present invention include: a polyolefin-based resin; an inorganic hypophosphite in an amount of 1.60 parts by weight to 10.00 parts by weight relative to 100 parts by weight of the polyolefin-based resin; and a melamine-based flame retardant in an amount of 0.01 parts by weight to 2.00 parts by weight relative to 100 parts by weight of the polyolefin-based resin.
Further, a method, in accordance with an embodiment of the present invention, for producing polyolefin-based resin expanded particles includes the steps of: dispersing polyolefin-based resin particles in an aqueous dispersion medium in a closed vessel and adding a blowing agent to a resultant dispersion slurry; heating an inside of the closed vessel to a temperature not lower than the softening temperature of the polyolefin-based resin particles; and obtaining polyolefin-based resin expanded particles by releasing a resultant mixture into an atmosphere lower in pressure than the inside of the closed vessel to expand the polyolefin-based resin particles, the polyolefin-based resin particles including: a polyolefin-based resin; an inorganic hypophosphite in an amount of 1.60 parts by weight to 10.00 parts by weight relative to 100 parts by weight of the polyolefin-based resin; and a melamine-based flame retardant in an amount of 0.01 parts by weight to 2.00 parts by weight relative to 100 parts by weight of the polyolefin-based resin.

Advantageous Effects of Invention

According to an embodiment of the present invention, it is possible to provide novel polyolefin-based resin expanded particles and a novel polyolefin-based resin foamed molded product that are excellent in flame retardancy.

Description of Embodiments

The following description will discuss embodiments of the present invention. The present invention is not, however, limited to the embodiments below. The present invention is not limited to the configurations described below, but may be altered in various ways within the scope of the claims by a person skilled in the art. The present invention also encompasses, in its scope, any embodiment or example derived by combining configurations disclosed in differing embodiments and Examples.

Further, a new technical feature can be formed by combining the technical means disclosed in differing embodiments.

All the technical and scientific terms used herein each have the same meaning as that typically understood by a person skilled in the art, unless otherwise defined.

As used herein, the "foamed material" refers to a material obtained through a foaming step. In particular, the foamed product obtained by in-mold foam molding is referred to as an "in-mold foamed molded product". The "in-mold foamed molded product" can be referred to simply as a "foamed molded product". A material obtained through an expanding step that is prior to the in-mold foam molding or the like is referred to as a "pre-expanded material". Further, a particulate pre-expanded material is referred to as a "resin expanded particle" or a "pre-expanded particle". The "foamed product" and the "foamed article" mean a product produced from the foamed material and/or the foamed molded product.

As used herein (in particular, the attached claims), the term such as "an", "one", "the" or any other similar term includes one object and a plurality of objects indicated by such a term, unless there are another clear indication and a contradiction in the context.

As used herein, the numerical range expressed as "numerical value A to numerical value B" shall include the numerical values A and B, which are the extremes of the range. Therefore, the expression "numerical value A to numerical value B" means "not less than numerical value A (including numerical value A and being greater than numerical value A) and not more than numerical value B (including numerical value B and being smaller than numerical value B).

As used herein, the term "may" includes both a meaning of carrying out the treatment concerned and a meaning of not carrying out the treatment concerned. As used herein, the terms "optional" and "optionally" mean that the matter or situation modified by the terms may occur or may not occur, and thus include both occurrence and non-occurrence.

As used herein, the phrases such as "some (preferred) embodiments", "another (preferred) embodiment", "some (preferred) examples", and "another (preferred) example" mean that particular elements (e.g., requirement, structure, property, and/or characteristic) associated with an embodiment are included in at least one embodiment described herein and can also be present or are not present in other embodiments. In addition, the above elements can be combined in each of the embodiments in any appropriate manner.

The terms "include", "contain", and "comprise" and the variants thereof used in the specification and the claims of the present invention are intended to cover non-exclusive inclusion. For example, a process, method, system, product, or device that includes a series of steps or units is not limited to the listed steps or units, but may optionally include a step or unit that is not listed. Alternatively, such a process, method, system, product, or device is intended to optionally include another step or unit unique to the process, method, product, or device.

[Polyolefin-based resin expanded particles]

Polyolefin-based resin expanded particles in accordance with an embodiment of the present invention include a polyolefin-based resin, an inorganic hypophosphite, and a melamine-based flame retardant. In some embodiments of the present invention, the polyolefin-based resin expanded particles are particles prepared by expanding polyolefin-based resin particles. Therefore, in some embodiments of the present invention, the polyolefin-based resin particles include a polyolefin-based resin, an inorganic hypophosphite, and a melamine-based flame retardant. The polyolefin-based resin expanded particles in accordance with an embodiment of the present invention contain the inorganic hypophosphite in an amount of 1.60 parts by weight to 10.00 parts by weight and contains the melamine-based flame retardant in an amount of 0.01 parts by weight to 2.00 parts by weight, relative to 100 parts by weight of the polyolefin-based resin.

With the above configuration, the polyolefin-based resin expanded particles in accordance with an embodiment of the present invention are excellent in flame retardancy. Accordingly, with the polyolefin-based resin expanded particles in accordance with an embodiment of the present invention, it is possible to provide a polyolefin-based resin foamed molded product excellent in flame retardancy.

A required flame-retardant rating of an in-mold foamed molded product depends on uses. An in-mold foamed molded product produced from the polyolefin-based resin expanded particles disclosed in patent literatures above can be suitably used in various fields in which flame retardancy or a self-extinguishing property is required, such as the fields of transportation, building, construction, furniture, and electrical and electronic appliances. However, there has been a demand for an increasingly tough flame-retardancy standard in these fields and other fields (e.g., the field of public transportation), and the need to improve the flame retardancy of a polyolefin-based foamed material is growing

accordingly. For example, high-speed public transportation has been undergoing a rapid development recently, and for the purpose of meeting the social and financial development needs, the speed of a transportation means has become faster, and the amenity and the reliability of the transportation means is becoming greater as well. A high-speed transportation means as public transportation, such as a high-speed railway or an airplane, is characterized by a high speed, a high flow of people, and high traffic volume. Therefore, the interior decorating materials of these high-speed transportation means, including the inner material of seats, need to satisfy required characteristics such as fire resistance, flame retardancy, low smoke-generation, and low toxicity that are stricter than those required in many other industries, in order for the safety of passengers to be ensured. As a result, the interior decorating materials for these high-speed transportation means need to have, for example, a higher flame-retardant rating and a higher oxygen index. This is because when a fire breaks out in such transportation, a great number of dead and injured and/or damage to property could be caused.

The oxygen index refers to the concentration of oxygen required for a material to reach the ignition temperature. The UL94 flame-retardant rating is a rating for evaluating the ability of a material to extinguish a fire after catching the fire. The oxygen index and the UL94 flame-retardant rating are methods for determining the flame-retardant capability of a material from different viewpoints. Even if having a high oxygen index, some materials cannot pass a high grade in the UL94 test.

An object of a preferred embodiment of the present invention is to provide polyolefin-based resin expanded particles and a polyolefin-based resin foamed molded product obtained by in-mold molding of the polyolefin-based resin expanded particles that ensure favorable moldability of a foamed article and also allow further improvements in flame retardancy and safety, specifically improvements in both the oxygen index and the UL94 flame-retardant rating, to reduce generation of a harmful gas during burning.

With the polyolefin-based resin expanded particles in accordance with a preferred embodiment of the present invention, it is possible to obtain an in-mold foamed molded product that has in-mold foam moldability and surface appearance which are as favorable as those of conventional ones and also exhibits excellent flame retardancy. The in-mold foamed molded product reaches the HF-1 grade in the UL94 horizontal burning test for foamed material (UL94HF) and in addition, has a favorable oxygen index. In some embodiments of the present invention, the oxygen index is preferably not less than 27.0%. In another embodiment of the present invention, the oxygen index is more preferably not less than 28.0% and even more preferably not less than 29.0%. The polyolefin-based resin foamed molded product produced from the polyolefin-based resin expanded particles in accordance with a preferred embodiment of the present invention is capable of reducing generation of a harmful gas during burning and being particularly suitably used in the field of an interior decorating material for public transportation, in particular, high-speed transportation.

The inventors of the present invention found that surprisingly, with a polyolefin-based resin containing specific amounts of an inorganic hypophosphite and a melamine-based flame retardant, it is possible to obtain polyolefin-based resin expanded particles and an in-mold molded product which exhibit high flame retardancy and which also exhibit favorable fusion of expanded particles during in-mold molding and have an excellent surface properties, and the in-mold molded product obtained has a high oxygen index (e.g., not less than 27.0%) and reaches the UL94 HF-1 grade. As used herein, "reaching the HF-1 grade" means that the polyolefin-based resin foamed molded product is capable of passing the HF-1 flame retardancy standard in the UL94 "horizontal burning test for foamed material". As used herein, "reaching the HF-1 grade" is not intended to mean that the polyolefin-based resin foamed molded product needs to be certified by the UL94 HF-1.

The components will be individually described below in detail.

[Polyolefin-based resin]

The polyolefin-based resin is a polymer obtained by homopolymerization of any one type of monomer selected from the group consisting primarily of an $\alpha$-olefin-based monomer and some of cyclic olefin-based monomers or by copolymerization of two or more types of monomers selected from the above-described group. A polystyrene-based resin does not fall under the polyolefin-based resin herein. Examples of the $\alpha$-olefin-based monomer include ethylene, propylene, 1-butene, 1-pentene, 1-hexene, 1-octene, and 4-methyl-1-pentene, i.e., a monoolefin having a double bond at a terminal of the molecular chain. The $\alpha$-olefin-based monomer is represented by the molecular formula, $R\text{-}CH{=}CH_2$ (where R is an alkyl).

The polyolefin-based resin used in an embodiment of the present invention is a polymer containing a structural unit derived from the $\alpha$-olefin-based monomer in an amount of not less than 75 weight%, relative to 100 weight% of all the structural units of the polyolefin-based resin. The polyolefin-based resin in accordance with an embodiment of the present invention contains the structural unit derived from the $\alpha$-olefin-based monomer in an amount preferably of 80 weight%, relative to 100 weight% of all the structural units of the polyolefin-based resin. Further, the polyolefin-based resin in accordance with an embodiment of the present invention may contain a structural unit(s) derived from other monomer(s) copolymerizable with the $\alpha$-olefin-based monomer in an amount which is, for example, not more than 25 weight% and preferably not more than 20 weight%, relative to 100 weight% of all the structural units of the polyolefin-based resin.

In some cases, a "structural unit derived from X monomer" is referred to as an "X unit" herein.

Specific examples of the α-olefin-based monomer include α-olefins having 2 to 12 carbon atoms, such as ethylene, propylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, or 1-decene. One of these monomers may be used singly, or two or more of these monomers may be used in combination.

Furthermore, specific examples of the other monomer(s) copolymerizable with the α-olefin-based monomer include (a) cyclic olefins such as cyclopentene, norbornene, and 1,4,5,8-dimethano-1,2,3,4,4a,8,8a,6-octahydronaphthalene and (b) dienes such as 5-methylene-2-norbornene, 5-ethylidene-2-norbornene, 1,4-hexadiene, methyl-1,4-hexadiene, and 7-methyl-1,6-ooctadiene. One of these monomers may be used singly, or two or more of these monomers may be used in combination.

Specific examples of the polyolefin-based resin used in an embodiment of the present invention include (a) a polyethylene-based resin whose main component is an ethylene unit, such as high-density polyethylene, medium-density polyethylene, low-density polyethylene, or linear low-density polyethylene and (b) a polypropylene-based resin whose main component is a propylene unit. One of these polyolefin-based resins may be used singly, or two or more of these polyolefin-based resins may be used in combination. Among these polyolefin-based resins, a polypropylene-based resin is preferably used as the polyolefin-based resin in terms of mechanical strength, heat resistance, etc. In other words, the polyolefin-based resin preferably contains a polypropylene-based resin, and the polyolefin-based resin is preferably a polypropylene-based resin.

The "polypropylene-based resin" used in an embodiment of the present invention is a polymer that is obtained by polymerization in which propylene is used as at least some of the monomers and that contains a propylene unit in an amount exceeding 50 weight% relative to 100 weight% of all the structural units of the polymer. The polypropylene-based resin is not limited to any particular polypropylene-based resin, provided that propylene is contained as the main component of a monomer unit in the polypropylene-based resin, and examples thereof include a polypropylene homopolymer, a propylene/α-olefin random copolymer, and a propylene/α-olefin block copolymer. One of these polypropylene-based resins may be used singly, or two or more of these polypropylene-based resins may be used in combination. Examples of the copolymer of propylene and α-olefin include a copolymer of propylene and an α-olefin having 4 to 10 carbon atoms. Examples of the α-olefin having 4 to 10 carbon atoms include 1-butene, 1-pentene, 1-hexene, 3,3-dimethyl-1-butene, 4-methyl-1-pentene, 4,4-dimethyl-1-pentene, and 1-octene.

In terms of having favorable expandability and favorable moldability, the polypropylene-based resin is preferably a propylene/ethylene random copolymer or a propylene/ethylene/1-butene random copolymer, among the above polymers. The polypropylene-based resin contains an ethylene unit in an amount preferably not less than 1 weight% and not more than 10 weight%, more preferably not less than 2 weight% and not more than 7 weight%, even more preferably not less than 3.5 weight% and not more than 6 weight%, and particularly preferably not less than 3.5 weight% and not more than 5 weight%, relative to 100 weight% of all the structural units of the polypropylene-based resin. Note that the amount of ethylene, serving as a copolymerizable monomer component, contained in the polypropylene-based resin (the amount of an ethylene unit contained, relative to all the structural units of the polypropylene-based resin) can be measured with use of $^{13}$C-NMR.

The melting point of the polypropylene-based resin used in an embodiment of the present invention is preferably not less than 130°C and not more than 165°C and more preferably not less than 135°C and not more than 155°C. When the melting point of the polypropylene-based resin is not less than 130°C, there is the advantage that the heat resistance and the mechanical strength of the in-mold foamed molded product are sufficient. When the melting point is not more than 165°C, there is the advantage of easily ensuring fusion during in-mold foam molding. The melting point refers to the peak temperature of the endothermic peak on a DSC curve obtained in a temperature increase stage (3) of the following stages (1) to (3) conducted with use of a differential scanning calorimeter. (1) One milligram to ten milligrams of the polypropylene-based resin is heated from 40°C to 220°C at a temperature increase rate of 10°C/minute; (2) the polypropylene-based resin is then cooled to 40°C at a temperature decrease rate of 10°C/minute; and (3) the polypropylene-based resin is heated again to 220°C at a temperature increase rate of 10°C/minute.

The melt flow rate (hereinafter, "MFR value") of the polypropylene-based resin used in an embodiment of the present invention is preferably not less than 0.5 g/10 minutes and not more than 30 g/10 minutes, and more preferably not less than 2 g/10 minutes and not more than 20 g/10 minutes. When the MFR value is (a) not less than 0.5 g/10 minutes, there is the advantage of easily obtaining the polypropylene-based resin expanded particles of a high expanding ratio. When the MFR value is (b) not more than 30 g/10 minutes, there is the advantage that the air bubbles of the polypropylene-based resin expanded particles are less prone to breakage and the open cell ratio of the polypropylene-based resin expanded particles decreases accordingly.

Note that the MFR value of the polypropylene-based resin is measured under the condition of a temperature of 230°C and a load of 2.16 kg, in accordance with JIS K7210.

For the polypropylene-based resin used in an embodiment of the present invention, a ratio (Mw/Mn) of the weight average molecular weight (which can hereinafter be denoted by "Mw") to the number average molecular weight (which can

hereinafter be denoted by "Mn") is not limited to any particular ratio, but is preferably not less than 3.0 and particularly preferably not less than 3.0 and not more than 6.0. The Mw and Mn of the polypropylene-based resin are measured by commonly-used gel permeation chromatography (GPC).

The raw material used for producing the polyolefin-based resin (e.g., polypropylene-based resin particle) may contain other type(s) of polyolefin-based resin that is different from a polypropylene-based resin and that is, for example, a polyethylene-based resin. Examples of such other type(s) of polyolefin-based resin include a high-density polyethylene-based resin, a medium-density polyethylene-based resin, a low-density polyethylene-based resin, and a linear low-density polyethylene-based resin. The other type(s) of polyolefin-based resin is preferably a linear low-density polyethylene (which is also referred to as "line-shape linear chain low-density polyethylene", and can be denoted by "LLDPE" for short), in order for the expanding ratio to be increased. One of the other types of polyolefin-based resin described above may be used singly, or two or more of the other types of polyolefin-based resin may be used in combination. When the other type(s) of polyolefin-based resin is used in an embodiment of the present invention, the polypropylene-based resin content is preferably not less than 80 weight%, more preferably not less than 90 weight%, and even more preferably not less than 95 weight%, relative to the total weight of the polyolefin-based resin (100 weight%).

In another embodiment of the present invention, the polyolefin-based resin may contain a polyethylene-based resin, and may be a polyethylene-based resin. When the polyolefin-based resin contains a polyethylene-based resin, or is a polyethylene-based resin, there is the advantage that it is possible to obtain a foamed molded product that is flexible and therefore less prone to breakage and that can endure repeated use.

The "polyethylene-based resin" used in another embodiment of the present invention is a polymer that is obtained by polymerization in which ethylene is used as at least some of the monomers and that contains an ethylene unit in an amount exceeding 50 weight% relative to 100 weight% of all the structural units of the polymer.

Examples of the polyethylene-based resin used in another embodiment of the present invention include an ethylene homopolymer, an ethylene/$\alpha$-olefin random copolymer, an ethylene/$\alpha$-olefin block copolymer, a low-density polyethylene, a high-density polyethylene, and a linear low-density polyethylene. Examples of the $\alpha$-olefin here include $\alpha$-olefins having 3 to 15 carbon atoms. One of such $\alpha$-olefins may be used singly, or two or more of such $\alpha$-olefins may be used in combination. Among these polyethylene-based resins, (a) the ethylene/$\alpha$-olefin block copolymer that contains a comonomer unit other than an ethylene unit in an amount of 1 weight% to 10 weight% relative to 100 weight% of all the structural units of the copolymer, or the linear low-density polyethylene are preferable. With such a configuration, there is the advantage that the polyethylene-based resin exhibits favorable expandability.

The melting point of the polyethylene-based resin used in another embodiment of the present invention is preferably not less than 110°C and not more than 140°C and more preferably not less than 120°C and not more than 130°C. The polyethylene-based resin having a melting point falling within the above range has the advantage that it is possible to obtain expanded particles that are excellent in expandability and moldability and that are excellent in mechanical strength and heat resistance when formed into a polyolefin-based resin in-mold foamed molded product. The melting point refers to the peak temperature of the endothermic peak on a DSC curve obtained in a temperature increase stage (3) of the following stages (1) to (3) conducted with use of a differential scanning calorimeter. (1)One milligram to ten milligrams of the polyethylene-based resin is heated from 40°C to 200°C at a temperature increase rate of 10°C/minute; (2) the polyethylene-based resin is then cooled to 40°C at a temperature decrease rate of 10°C/minute; and (3) the polyethylene-based resin is heated again to 200°C at a temperature increase rate of 10°C/minute.

The MFR value of the polyethylene-based resin used in another embodiment of the present invention is preferably not less than 0.5 g/10 minutes and not more than 30 g/10 minutes, more preferably not less than 1 g/10 minutes and not more than 5 g/10 minutes, and particularly preferably not less than 1.5 g/10 minutes and not more than 2.5 g/10 minutes. When the MFR value of the polyethylene-based resin is not less than 0.5 g/10 minutes, there are not only the advantage of easily obtaining expanded particles of a high expanding ratio but also the advantage of having a tendency of the cell diameters of the expanded particles to be uniform. When the MFR value of the polyethylene-based resin is not more than 30 g/10 minutes, there are the advantage of being easily expanded, the advantage of having a tendency of the open cell ratio of expanded particles to be low because the bubbles are less prone to breakage, and the advantage of having a tendency of the cell diameters of the expanded particles to be uniform. Note that the MFR value of the polyethylene-based resin is measured under the condition of a temperature of 190°C and a load of 2.16 kg, in accordance with JIS K7210.

The polyolefin-based resin used in an embodiment of the present invention can be obtained with use of a catalyst such as a Ziegler catalyst, a metallocene catalyst, or a post-metallocene catalyst. When a Ziegler catalyst is used, there is a tendency of the polyolefin-based resin (polymer) of a large Mw/Mn to be obtained. Further, it is possible to adjust the characteristics such as the molecular weight and/or the melt flow rate of a polyolefin-based resin (polymer) obtained with use of these catalysts by subjecting the polyolefin-based resin (polymer) to oxidative degradation with use of an organic peroxide.

Although preferably in a non-crosslinked state, the polyolefin-based resin used in an embodiment of the present invention may be crosslinked by treatment with use of an organic peroxide, radiation, etc.

[Inorganic hypophosphite]

The inorganic hypophosphite is an inorganic phosphorus flame retardant, and is used as a main flame retardant in an embodiment of the present invention. The inorganic hypophosphite is an effective radical-trapping and carbonizing agent (a) the phosphorus content of which is high and (b) which has both the flame retardant mechanism in the vapor phase and the flame retardant mechanism in the condensed phase, is (c) excellent in heat stability and water resistance, and (c) has a small amount of influence on the mechanical characteristics of the polymer. The inorganic hypophosphite is therefore suitably used for a foamed plastic. According to an embodiment of the present invention, using an inorganic hypophosphite as the main flame retardant makes it possible to significantly reduce toxicity and production cost, in comparison with a case of using, as the main flame retardant, an organic phosphinate having an organic group.

In an embodiment of the present invention, specific examples of the inorganic hypophosphite include aluminum hypophosphite (which is referred to as "ALHP" for short and whose chemical formula is $Al(H_2PO_3)_3$), sodium hypophosphite, magnesium hypophosphite, zinc hypophosphite, and calcium hypophosphite. One of these compounds may be used singly, or two or more of these compounds may be used in combination. The inventors of the present invention used aluminum hypophosphite as the main flame retardant in an embodiment of the present invention, and made a novel finding on their own that such use brings about more excellent flame retardancy and heat stability. The inorganic hypophosphite is therefore preferably aluminum hypophosphite.

The polyolefin-based resin expanded particles in accordance with an embodiment of the present invention contain an inorganic hypophosphite in an amount of 1.60 parts by weight to 10.00 parts by weight relative to 100 parts by weight of the polyolefin-based resin. In this case, a polyolefin-based resin foamed molded product produced from the polyolefin-based resin expanded particles is excellent in both flame retardancy and moldability, and is capable of passing the HF-1 grade in the UL94 "horizontal burning test for foamed material" (i.e., the UL94HF test method) and satisfying an oxygen index of not less than 27.0%. When the inorganic hypophosphite content is less than 1.60 parts by weight, the flame-retardant effect is insufficient, and the UL94 HF-1 grade cannot be reached. When the inorganic hypophosphite content is more than 10.00 parts by weight, the dispersion stability and the size of cells (cell diameter) in a case of supercritical expansion could be adversely affected, and the moldability can also be affected due to the adhesion of the inorganic component to the surface of the expanded particles. In some embodiments of the present invention, the inorganic hypophosphite content is preferably 1.80 parts by weight to 4.00 parts by weight in order for both the HF-1 grade and the oxygen index of 28.0% to be achieved. Since the carbonizability of a resultant foamed molded product during burning is improved and the foamed molded product is capable of achieving the HF-1 grade and a higher oxygen index, the inorganic hypophosphite content may be 1.80 parts by weight to 3.80 parts by weight, and furthermore, may be 2.00 parts by weight to 3.70 parts by weight in another embodiment of the present invention.

[Melamine-based flame retardant]

The melamine-based flame retardant, which is also referred to as a melamine flame retardant, is a flame retardant containing a melamine structure, excellent in heat stability, and having a favorable flame-retardant effect and a smoke reduction effect. Since a resultant foamed molded product is excellent in the heat stability, the flame-retardant effect, and the smoke reduction effect, the melamine-based flame retardant preferably contains at least one selected from the group consisting of melamine sulfate ($C_3H_8N_6O_4S$, CAS: 84962-53-8), a melamine polyphosphate ($C_3H_6N_6.(H_3PO_4)_n$, CAS: 218768-84-4), melamine cyanurate ($C_6H_9N_9O_3$, CAS: 37640-57-6), melamine pyrophosphate ($C_3H_{10}N_6O_7P_2$, CAS: 15541-60-3), and a melamine hydrobromide ($C_3H_6N_6.(HBr)_x$, CAS: 29305-12-2) in an embodiment of the present invention. The "melamine hydrobromide" can be referred to as a "melamine salt of hydrobromic acid".

In some embodiments of the present invention, the melamine-based flame retardant is more preferably a melamine hydrobromide (which can hereinafter be denoted by "MHB") that has the advantages to both a nitrogen-based flame retardant and a bromine-based flame retardant. When melamine hydrobromide is used as the melamine-based flame retardant, there is the advantage that high flame retardancy is achieved with a small amount used. For X=1, the molecular formula of the melamine hydrobromide ($C_3H_6N_6.(HBr)_x$) is as follows.

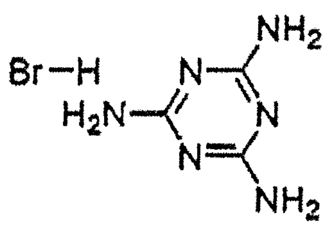

The inventors of the present invention made the following surprising finding on their own: Using only a small amount of a

melamine-based flame retardant produces a flame retardancy synergistic effect between an inorganic hypophosphite and the melamine-based flame retardant. This enables a polyolefin-based resin foamed molded product in accordance with an embodiment of the present invention to not only have favorable flame retardancy but also satisfy the requirements for safety and environmental protection.

The polyolefin-based resin expanded particles in accordance with an embodiment of the present invention contain the melamine-based flame retardant in an amount of 0.01 parts by weight to 2.00 parts by weight relative to 100 parts by weight of the polyolefin-based resin expanded particle. Since it is possible to achieve high flame retardancy, a reduction in the halogen content in the end product (foamed molded product), and low production costs, the melamine-based flame retardant content is preferably 0.01 parts by weight to 1.00 part by weight relative to 100 parts by weight of the polyolefin-based resin, in some embodiments of the present invention. In order for the halogen content in the end product to be further reduced, the melamine-based flame retardant content is more preferably not more than 0.30 parts by weight. From the viewpoint of being capable of achieving higher flame retardancy, a significant reduction in the halogen content in the end product (foamed molded product), and lower production costs, the melamine-based flame retardant content may be 0.02 parts by weight to 0.16 parts by weight in another embodiment of the present invention.

In the polyolefin-based resin expanded particles in accordance with some embodiments of the present invention, the weight ratio of the inorganic hypophosphite to the melamine-based flame retardant (inorganic hypophosphite content (parts by weight)/melamine-based flame retardant content (parts by weight)) is preferably more than 20 and more preferably 25 to 27. When the weight ratio of the inorganic hypophosphite to the melamine-based flame retardant is in the above range, there are the advantages that there is no possibility that a problem with environmental protection arises, and the flame-retardant rating and/or the oxygen index of the foamed product is/are not adversely affected.

[Other flame retardancy component(s)]

In order for the oxygen index and stability to be further improved, the polyolefin-based resin particles optionally further include a compound that is represented by a general formula (1), in a preferred embodiment of the present invention.

$$R^1NHCH_2CH_2CH_2NR^2CH_2CH_2NR^3CH_2CH_2CH_2NHR^4 \qquad (1)$$

(where $R^1$ and $R^2$ are groups represented by a general formula (2):

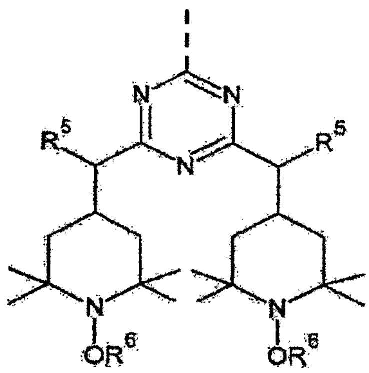

(2)

(where $R^5$ is an alkyl group having 1 to 12 carbon atoms and $R^6$ is a methyl group, a cyclohexyl group, or an octyl group), a dashed line above a triazine ring indicated in the general formula (2) represents a bond to a nitrogen atom of the general formula (1), one of $R^3$ and $R^4$ is a group represented by the general formula (2), a dashed line above a triazine ring indicated in the general formula (2) represents a bond to a nitrogen atom of the general formula (1), and the other of $R^3$ and $R^4$ represents a hydrogen atom).

In other words, the polyolefin-based resin expanded particles optionally further include the compound represented by the general formula (1) in a preferred embodiment of the present invention.

In the general formula (2), $R^5$ represents an alkyl having 1 to 12 carbon atoms, such as methyl, ethyl, propyl, butyl, n-pentyl, n-hexyl, n-heptyl, nonyl, decyl, undecyl, dodecyl, isopropyl, isobutyl, sec-butyl, tert-butyl, 2-ethylbutyl, isopentyl, 1-methylpentyl, 1,3-dimethylbutyl, 1-methylhexyl, isoheptyl, 1,1,3,3-tetramethylpentyl, 1-methylundecyl, or 1,1,3,3,5,5-hexamethylhexyl. In the general formula (2), $R^6$ represents a methyl group, a cyclohexyl group, or an octyl group. Specific examples of the group represented by the general formula (2) include a group derived from, for example, 2,4-bis[(1-methoxy-2,2,6,6-tetramethylpiperidine-4-yl)n-butylamino]-s-triazine, 2,4-bis[(1-oxocyclohexyl-2,2,6,6-tetramethylpiperidine-4-yl)n-butylamino]-s-triazine, or 2,4-bis[(1-octyloxy-2,2,6,6-tetramethylpiperidine-4-yl)n-butylamino]-s-triazine.

The compound represented by the general formula (1) is a sterically-hindered amine ether-based compound. Specific examples of the compound represented by the general formula (1) include N,N',N'''-tris{2,4-bis[(1-oxocyclohexyl-2,2,6,6-tetramethylpiperidine-4-yl)n-butylamino]-s-triazine-6yl}-3,3'-etylenediiminopropylamines, N,N',N''-tris{2,4-bis[(1-oxocyclohexyl-2,2,6,6-tetramethylpiperidine-4-yl)n-butylamino]-s-triazine-6-yl}-3,3'-ethylenediiminodipropylamines, N,N',N'''-tris{2,4-bis[(1-octyloxy-2,2,6,6-tetramethylpiperidine-4-yl)n-butylamino]-s-triazine-6-yl}-3,3'-ethylenediiminodipropylamines, N,N',N"-tris{2,4-bis[(1-octyloxy-2,2,6,6-tetramethylpiperidine-4-yl)n-butylamino]-s-triazine-6-yl}-3,3'-ethylenediiminopropylamines, N,N',N'''-tris{2,4-bis[(1-methoxy-2,2,6,6-tetramethylpiperidine-4-yl)n-butylamino]-s-triazine-6-yl}-3,3'-etylenediiminopropylamines, and N,N',N''-tris{2,4-bis[(1-methoxy-2,2,6,6-tetramethylpiperidine-4-yl)n-butylamino]-s-triazine-6-yl}-3,3'-etylenediiminopropylamines. One of these compounds may be used singly, or two or more of these compounds may be used in combination.

In an embodiment of the present invention, whether the compound represented by the general formula (1) is added or not may be determined according to the requirements in the actual applied area. The polyolefin-based resin expanded particles in accordance with some embodiments of the present invention contain the compound represented by the general formula (1) in an amount that is preferably 0.01 parts by weight to 2.00 parts by weight, more preferably 0.10 parts by weight to 1.50 parts by weight, and even more preferably 0.20 parts by weight to 1.00 part by weight, relative to 100 parts by weight of the polyolefin-based resin particle, from the viewpoint of flame retardancy and costs. When the compound represented by the general formula (1) is used in the above range, there is the advantage that there is no possibility that the cost becomes too high and there is no possibility that the oxygen index of the foamed product is adversely affected.

In another preferred embodiment of the present invention, the polyolefin-based resin particles further include one or more bromine-based flame retardants (excluding the melamine-based flame retardant described above) selected from the group consisting of a brominated bisphenol A flame retardant, a brominated bisphenol S flame retardant, a brominated butadiene-styrene block copolymer flame retardant, and a brominated polyphenylene ether flame retardant. In other words, in another preferred embodiment of the present invention, the polyolefin-based resin expanded particles further include one or more bromine-based flame retardants (excluding the melamine-based flame retardant described above) selected from the group consisting of a brominated bisphenol A flame retardant, a brominated bisphenol S flame retardant, a brominated butadiene-styrene block copolymer flame retardant, and a brominated polyphenylene ether flame retardant. Among the bromine-based flame retardants above, a brominated bisphenol A flame retardant and/or a brominated bisphenol S flame retardant such as a bis(alkyl ether)tetrabromobisphenol A flame retardant and/or a bis(alkyl ether) tetrabromo bisphenol S flame retardant is/are preferable, and a brominated bisphenol S flame retardant is more preferable, from the viewpoint of achieving a higher oxygen index. In other words, the bromine-based flame retardant preferably includes at least one selected from the group consisting of a brominated bisphenol A flame retardant and a brominated bisphenol S flame retardant. In some embodiments of the present invention, the polyolefin-based resin particles and the polyolefin-based resin expanded particles may include a bromine-based flame retardant other than the bromine-based flame retardants described above (other bromine-based flame retardant(s)). Specific examples of the brominated bisphenol A flame retardant and the brominated bisphenol S flame retardant include at least one selected from the group consisting of tetrabromobisphenol A, tetrabromobisphenol S, tetrabromobisphenol A-bis(2,3-dibromopropyl ether) (which can hereinafter be denoted by "TBAB", and is also referred to as "octabromoether"), tetrabromobisphenol A-bis(2,3-dibromo-2-methylpropyl ether), tetrabromobisphenol A-diglycidyl ether, and tetrabromobisphenol S-bis(2,3-dibromo-2-methylpropyl ether (which can hereinafter be denoted by "TBSB").

The polyolefin-based resin expanded particles in accordance with an embodiment of the present invention contain the bromine-based flame retardant in an amount that is preferably 0.10 parts by weight to 5.00 parts by weight, more preferably 0.20 parts by weight to 3.00 parts by weight, and even more preferably 0.20 parts by weight to 1.50 parts by weight, relative to 100 parts by weight of the polyolefin-based resin. With this configuration, there is the advantage that it is possible to obtain a foamed product excellent in flame retardancy (e.g., having a higher oxygen index).

In another preferred embodiment of the present invention, the polyolefin-based resin particles further include a radical generating agent, in order for the flame retardancy of the polyolefin-based resin in-mold foamed molded product to be further improved. In other words, the polyolefin-based resin expanded particles further include a radical generating agent in another preferred embodiment of the present invention.

Examples of the radical generating agent used in an embodiment of the present invention include 2,3-dimethyl-2,3-diphenylbutane, poly-1,4-diisopropylbenzene, 2,3-diethyl-2,3-diphenylbutane, 3,4-dimethyl-3,4-diphenylhexane, 3,4-diethyl-3,4-diphenylhexane, 2,4-diphenyl-4-methyl-1-pentene, and 2,4-diphenyl-4-ethyl-1-pentene. As the radical generating agent used in an embodiment of the present invention, peroxides such as dicumyl peroxides can also be used. Among these radical generating agents, the radical generating agent which is stable under the resin process temperature is preferable. Specifically, at least one selected from the group consisting of 2,3-dimethyl-2,3-diphenylbutane and poly-1,4-diisopropylbenzene is preferable. In other words, the radical generating agent preferably contains at least one selected from the group consisting of 2,3-dimethyl-2,3-diphenylbutane and poly-1,4-diisopropylbenzene. In some

embodiments of the present invention, the radical generating agent is preferably 2,3-dimethyl-2,3-diphenylbutane (which can hereinafter be denoted by "DMDPB").

The polyolefin-based resin expanded particles contain the radical generating agent in an amount which is preferably 0.01 parts by weight to 0.50 parts by weight relative to 100 parts by weight of the polyolefin-based resin, in some embodiments of the present invention. In another embodiment of the present invention, the radical generating agent content may be 0.02 parts by weight to 0.20 parts by weight relative to 100 parts by weight of the polyolefin-based resin. In another embodiment of the present invention, the radical generating agent content may be 0.03 parts by weight to 0.15 parts by weight relative to 100 parts by weight of the polyolefin-based resin.

[Other component(s)]

In order for a black molded product to be obtained, carbon black may be contained in the polyolefin-based resin particles used for forming the polyolefin-based resin expanded particles in accordance with an embodiment of the present invention.

Specific examples of the carbon black used in an embodiment of the present invention include channel black, roller black, disc black, gas furnace black, oil furnace black, thermal black, and acetylene black. One of these kinds of carbon black may be used singly, or two or more of these kinds of carbon black may be used in combination.

The polyolefin-based resin particles and the polyolefin-based resin expanded particles in accordance with an embodiment of the present invention contain the carbon black in an amount that is preferably not less than 0.5 parts by weight and not more than 20.0 parts by weight relative to 100 parts by weight of the polyolefin-based resin particle. In some embodiments of the present invention, the carbon black content is more preferably 0.50 parts by weight to 2.00 parts by weight. When the carbon black content is not less than 0.50 parts by weight, there is a tendency that the polyolefin-based resin expanded particles and the in-mold foamed molded product easily become sufficiently black. When the carbon black content is not more than 20.00 parts by weight, there is no possibility that the cell diameter of resultant polypropylene-based resin expanded particles becomes finer, and there is not only a tendency of the in-mold foam moldability (in particular, the surface appearance) to be favorable, but is also a tendency of sufficient flame retardancy to be obtained.

In an embodiment of the present invention, the carbon black and the polyolefin-based resin may be directly mixed, and the carbon black and the polyolefin-based resin are melted and kneaded together to form a carbon black master batch in which that the carbon black is dispersed in the polyolefin-based resin, and the carbon black master batch may be used. Examples of the polyolefin-based resin used for the carbon black master batch include a polyethylene-based resin and a polypropylene-based resin.

The polyolefin-based resin particles may contain an expansion nucleating agent (hereinafter, "nucleating agent") that can serve as an expansion nuclei. Examples of the nucleating agent used in an embodiment of the present invention include inorganic nucleating agents such as talc, calcium stearate, calcium carbonate, silica, kaolin, titanium oxide, bentonite, barium sulfate, and zinc borate. One of these nucleating agents may be used singly, or two or more of nucleating agents may be used in combination. Among these nucleating agents, talc, calcium carbonate, and calcium stearate are preferable in that such nucleating agents are cheap and make it possible to obtain uniform cells. The amount of the nucleating agent added in an embodiment of the present invention varies according to the types of blowing agents used. The amount of the nucleating agent added in an embodiment of the present invention is typically 0.005 parts by weight to 2 parts by weight and even more preferably 0.01 parts by weight to 1 part by weight, relative to 100 parts by weight of the polyolefin-based resin. When the amount of the nucleating agent added is not less than 0.005 parts by weight, there is a tendency of being likely to be sufficiently expanded. When the amount of the nucleating agent added is not more than 2 parts by weight, there is no possibility that the average cell diameter of the polyolefin-based resin expanded particles becomes too small, and there is a tendency of the in-mold foam moldability to be favorable.

To the extent that does not impair the effects in accordance with an embodiment of the present invention, a thermal stabilizer, a photo stabilizer, a coloring agent, an antistatic agent, a radiative heat transfer inhibitor, other flame retardant(s), a lubricant, a filler, etc. may be added as appropriate to the polyolefin-based resin particle. In other words, the polyolefin-based resin expanded particles in accordance with an embodiment of the present invention may contain a thermal stabilizer, a photo stabilizer, a coloring agent, an antistatic agent, a radiative heat transfer inhibitor, other flame retardant(s), a lubricant, a filler, etc.

Examples of the thermal stabilizer in an embodiment of the present invention include a hindered amine compound, a phosphorus compound, and an epoxy compound. Specific examples of the photo stabilizer include a hindered amine, a phosphorus stabilizer, an epoxy compound, a phenolic oxidation-inhibitor, a nitrogen-containing stabilizer, a sulfur stabilizer, a benzotriazole.

Specific examples of the coloring agent used in an embodiment of the present invention include: inorganic pigments such as carbon black, Ketjenblack, iron black, cadmium yellow, cadmium red, cobalt violet, cobalt blue, Prussian, ultramarine blue, chrome yellow, zinc yellow, and barium yellow; and organic pigments such as polyazo, quinacridone, phthalocyanine, Perlon, anthraquinone, thioindigo, dioxazine, isoindolinone, and Quinophthalone.

Examples of the antistatic agent used in an embodiment of the present invention include, but not limited to, (a) low molecular antistatic agents such as a fatty acid ester compound, an aliphatic ethanolamine compound, and an aliphatic ethanolamide compound, and (b) high molecular antistatic agents. One of these antistatic agents may be used singly, or two or more of these antistatic agents may be used in combination. Commercially available antistatic agents can also be used. For example, examples of a commercially available product of the mixture of octadecyl diethanolamine monostearate and octadecyl diethanolamine include Electro Stripper TS-11B, and examples of a commercially available product of the mixture of octadecyl diethanolamine monostearate, octadecyl diethanolamine, and an aliphatic alcohol include Electro Stripper TS-15B. The polyolefin-based resin expanded particles in accordance with an embodiment of the present invention contain the antistatic agent in an amount that is preferably 0.1 parts by weight to 3 parts by weight and particularly preferably 0.2 parts by weight to 2 parts by weight, relative to 100 parts by weight of the polyolefin-based resin. When the antistatic agent content is not less than 0.1 parts by weight, there is a tendency of easily exerting the antistatic effect. When the antistatic agent content is not more than 3 parts by weight, there is a tendency that the deformation and shrinkage ratio of a resultant foamed molded product becomes small and the surface of the molded product extends favorably.

Examples of the radiative heat transfer inhibitor (a substance having the characteristic of reflecting, scattering, or absorbing light in the near-infrared or infrared domain (e.g., the wavelength range of approximately 800 nm to 3000 nm)) used in an embodiment of the present invention include graphite, graphene, activated carbon, carbon black, titanium dioxide, and metal aluminum.

[Method for producing polyolefin-based resin particles]

The polyolefin-based resin particles used in an embodiment of the present invention are obtained with use of raw materials such as (a) a polyolefin-based resin, (b) an inorganic hypophosphite, (c) a melamine-based flame retardant, and (d) other optional flame-retardant component(s) or other optional additive(s) such as carbon black, a nucleating agent, and the compound represented by the general formula (1). The polyolefin-based resin particles used in an embodiment of the present invention are obtained as polyolefin-based resin particles having the shape of a cylinder, an ellipse, a sphere, a cube, a cuboid, etc. after melting and kneading of these raw materials with use of an extruder, a kneader, a Banbury mixer, a roller, or the like. In some embodiments of the present invention, after each of the flame retardants, such as the inorganic hypophosphite and the melamine-based flame retardant, is mixed with the polyolefin-based resin to form a flame-retardant master batch, a large amount of the polyolefin-based resin and other component(s) may be melted and kneaded together with the flame-retardant master batch. In another embodiment of the present invention, after the flame retardants such as the inorganic hypophosphite and the melamine-based flame retardant and the radical generating agent are mixed into the polyolefin-based resin so as to be dispersed and a composite flame-retardant master batch is thereby prepared, the polyolefin-based resin and other component(s) may be melted and kneaded together with the composite flame-retardant master batch.

The weight of one polyolefin-based resin particle in accordance with an embodiment of the present invention is preferably not less than 0.1 mg and not more than 30 mg and more preferably not less than 0.3 mg and not more than 10 mg for the purpose of making expanded particles having an appropriate average maximum diameter. Note that the weight of one polyolefin-based resin particle refers to the average resin particle weight of 100 particles randomly selected from among the polyolefin-based resin particles.

[Method for producing polyolefin-based resin expanded particles]

A method, in accordance with an embodiment of the present invention, for producing polyolefin-based resin expanded particles includes the steps of: dispersing polyolefin-based resin particles in an aqueous dispersion medium in a closed vessel and adding a blowing agent to a resultant dispersion slurry; heating an inside of the closed vessel to a temperature not lower than the softening temperature of the polyolefin-based resin particles; and obtaining polyolefin-based resin expanded particles by releasing a resultant mixture into an atmosphere lower in pressure than the inside of the closed vessel to expand the polyolefin-based resin particles, the polyolefin-based resin particles including: a polyolefin-based resin; an inorganic hypophosphite in an amount of 1.60 parts by weight to 10.00 parts by weight relative to 100 parts by weight of the polyolefin-based resin; and a melamine-based flame retardant in an amount of 0.01 parts by weight to 2.00 parts by weight relative to 100 parts by weight of the polyolefin-based resin.

The method for producing the polyolefin-based resin expanded particles in accordance with an embodiment of the present invention include the above configuration. It is therefore possible to provide polyolefin-based resin expanded particles that are capable of providing an in-mold foamed molded product which has in-mold foam moldability and surface appearance that are as favorable as those of conventional ones and which also exhibits excellent flame retardancy.

In some embodiments of the present invention, the blowing agent is (a) water and/or (b) an inorganic gas such as carbon dioxide, air, or nitrogen. One of these blowing agents may be used singly, or more than one of these blowing agents

may be used in combination. These blowing agents put only a small amount of load on the environment and do not have a risk of flaming. Among these blowing agents, carbon dioxide is more preferable.

It is preferable to use water alone, as the aqueous dispersion medium used in an embodiment of the present invention. However, a dispersion medium prepared by adding methanol, ethanol, ethylene glycol, glycerin, or the like to water can also be used. In an embodiment of the present invention, when a hydrophilic compound is contained, the water in the aqueous dispersion medium serves as a blowing agent and is useful in increasing the expanding ratio.

It is preferable to use a dispersing agent in the aqueous dispersion medium, in order to prevent the polyolefin-based resin particles from agglomerating. Examples of the dispersing agent used in an embodiment of the present invention include inorganic dispersing agents such as calcium phosphate, magnesium phosphate, basic magnesium carbonate, calcium carbonate, barium sulfate, kaolin, talc, and clay. One of these dispersing agents may be used singly, or two or more of these dispersing agents may be used in combination. In an embodiment of the present invention, it is more preferable to use a dispersion auxiliary agent and the dispersing agent in combination. Examples of the dispersion auxiliary agent used in an embodiment of the present invention include (a) a polymer surfactant of a carboxylate type such as an N-acylamino acid salt, (b) a polymer surfactant of a sulfonate type such as an alkyl benzene sulfonate, (c) a polymer surfactant of a sulfate ester type such as an alkyl allyl ether sulfate, and (d) a polymer surfactant of a polycarboxylic acid type such as a maleic acid copolymer salt or a polyacrylate. One of these dispersion auxiliary agents may be used singly, or two or more of these dispersion auxiliary agents may be used in combination. It is preferable to use, in combination, at least one, as the dispersing agent, selected from the group consisting of calcium phosphate, magnesium phosphate, barium sulfate, and kaolin and at least one, as the dispersion auxiliary agent, selected from the group consisting of an n-sodium alkane sulfonate and a sodium alkylbenzene sulfonate (e.g., DBS).

The amounts of the dispersing agent and the dispersion auxiliary agent used in an embodiment of the present invention vary according to the types of these agents and the type and amount of the polyolefin-based resin particles used. As to the amounts of the dispersing agent and the dispersion auxiliary agent used in an embodiment of the present invention, it is typically preferable that, relative to 100 parts by weight of the aqueous dispersion medium, the dispersing agent be contained in an amount of 0.2 parts by weight to 2.5 parts by weight and the dispersion auxiliary agent be contained in an amount of 0.005 parts by weight to 0.08 parts by weight. It is preferable to add the polyolefin-based resin particles in an amount of 25 parts by weight to 90 parts by weight relative to 100 parts by weight of the aqueous dispersion medium, in order to make favorable the dispersibility of the polyolefin-based resin particles in the aqueous dispersion medium.

In some embodiments of the present invention, the heating temperature (which can also be referred to as "expansion temperature") inside a closed vessel is preferably equal to or higher than [the melting point of the polyolefin-based resin particles - 25°C] and equal to or lower than [the melting point of the polyolefin-based resin particles + 25°C], and more preferably equal to or higher than [the melting point of the polyolefin-based resin particles - 15°C] and equal to or lower than [the melting point of the polyolefin-based resin particles + 15°C]. The inside of the closed vessel is heated to such a temperature and is increased further in pressure so that the polyolefin-based resin particles are impregnated with the blowing agent. In some embodiments of the present invention, the expansion temperature is preferably 150°C to 160°C and more preferably 154°C to 160°C.

In some embodiments of the present invention, the expansion pressure is preferably 1.3 MPa to 2.2 MPa, more preferably 1.3 MPa to 1.8 MPa, and even more preferably 1.4 MPa to 1.7 MPa. When the expansion temperature and the expansion pressure are in the above ranges, resultant expanded particles have the advantage of being excellent in moldability, and a resultant foamed molded product has the advantage of being excellent in appearance and molded product strength.

The closed vessel for dispersing the polyolefin-based resin particles is not limited to any particular vessel, provided that the vessel endures the pressure and temperature inside the vessel during the production of the polyolefin-based resin particles. Examples of such a vessel include an autoclave-type vessel.

The expanding ratio of the polyolefin-based resin expanded particles obtained by the above production method is, for example, not less than 5 times and not more than 45 times. The expanding ratio of the polyolefin-based resin expanded particles affects the density of a molded product (when the expanding ratio is higher, the density of the molded product is lower), and also affects the flame retardancy (in particular, the oxygen index) of a molded product to some extent. In some embodiments of the present invention, the expanding ratio of the polyolefin-based resin expanded particles is preferably 8 times to 45 times, more preferably 9 times to 40 times, and even more preferably 10 times to 38 times. For the determination of the expanding ratio of the polyolefin-based resin expanded particle, the weight w (g) of the polyolefin-based resin expanded particle and the volume of the polyolefin-based resin expanded particle submerged in ethanol v ($cm^3$) are determined, and with the obtained weight w and volume v, and the density d ($g/cm^3$) of the polyolefin-based resin particle before expansion, the expanding ratio is determined from the formula below.

$$\text{Expanding ratio} = d \times v / w$$

The volume v of the polyolefin-based resin expanded particle submerged in ethanol means the value ($cm^3$) obtained by submerging the polyolefin-based resin expanded particle in ethanol of a measuring cylinder containing the ethanol and then reading the amount of elevation of the liquid level of the ethanol off the graduations of the measuring cylinder.

The polyolefin-based resin expanded particles of a high expanding ratio may be obtained by, for example, a two-stage expansion method in which the polyolefin-based resin expanded particles expanded at an expanding ratio of not less than 5 times and not more than 35 time are produced in advance and these polyolefin-based resin expanded particles are additionally expanded by the following processes (1) and (2): (1) Performing pressurization treatment in which the polyolefin-based resin expanded particles are put in a closed vessel and the polyolefin-based resin expanded particles are impregnated with nitrogen, air, etc.; and (2) After making the pressure inside the polyolefin-based resin expanded particles higher than normal pressure in the pressurization treatment, additionally expanding the polyolefin-based resin expanded particles by heating with use of steam, etc.

The polyolefin-based resin expanded particles in accordance with an embodiment of the present invention may be obtained by, for example, the following method: Dispersing the polyolefin-based resin particles in accordance with an embodiment of the present invention in an aqueous dispersion medium in a closed vessel, heating the inside of the closed vessel to a temperature not lower than the softening temperature of the polyolefin-based resin particles in the presence of a blowing agent, and then releasing a resultant mixture into an atmosphere lower in pressure than the inside of the closed vessel, so that the polyolefin-based resin particles are expanded.

[Polyolefin-based resin foamed molded product]

The polyolefin-based resin foamed molded product in accordance with an embodiment of the present invention is prepared by in-mold foam molding of the polyolefin-based resin expanded particles described in the section [Polyolefin-based resin expanded particles] or the polyolefin-based resin expanded particles obtained by the production method described in the section [Method for producing polyolefin-based resin expanded particles].

The polyolefin-based resin foamed molded product in accordance with an embodiment of the present invention, which has the configurations described above, has the advantage of having in-mold foam moldability and surface appearance which are as favorable as those of conventional ones and also exhibiting excellent flame retardancy.

The polyolefin-based resin foamed molded product in accordance with an embodiment of the present invention can be obtained by in-mold foam molding in which a mold is filled with the polyolefin-based resin expanded particles described in the section [Polyolefin-based resin expanded particles] or the polyolefin-based resin expanded particles obtained by the production method described in the section [Method for producing polyolefin-based resin expanded particles], and the polyolefin-based resin expanded particles are heated with use of steam, etc. so that the polyolefin-based resin expanded particles are fused together.

In a case of using the polyolefin-based resin expanded particles in accordance with an embodiment of the present invention in in-mold foam molding, the conventionally-known methods below are applicable.

(a) a method of using the polyolefin-based resin expanded particles, as they are, in order to mold the polyolefin-based resin expanded particles;
(b) a method of impregnating the polyolefin-based resin expanded particles with an inorganic gas such as air under pressure in advance and filling a mold with the polyolefin-based resin expanded particles to which the ability to expand has been imparted, in order to mold the polyolefin-based resin expanded particles; and
(c) a method of filling a mold with expanded particles which are in a compressed state, in order to mold the expanded particles.

The following description will discuss the case in which used in an embodiment of the present invention is a method (which can hereinafter be referred to as "internal pressure imparting method") of impregnating the polyolefin-based resin expanded particles with an inorganic gas such as air under pressure in advance and imparting the ability to expand to the polyolefin-based resin expanded particles. In a case of using the internal pressure imparting method, the internal pressure to be imparted to the polyolefin-based resin expanded particles is preferably not more than 3.0 atm, more preferably not less than 1.3 atm and not more than 3.0 atm, and even more preferably not less than 1.5 atm and not more than 2.5 atm. When the internal pressure to be imparted to the polyolefin-based resin expanded particles is not more than 3.0 atm, the time required for the internal pressure imparting in a pressure vessel is reduced, and in addition, the time for cooling which is necessary during in-mold molding is reduced, so that the molding cycle is shortened. This provides a tendency of the productivity to be improved. Further, when the imparted internal pressure is not less than 1.3 atm, there is the advantage that after the in-mold molding, (a) there is no possibility of the generation of a gap between the particles on the surface of the polyolefin-based resin foamed molded product, (b) there is no possibility of the generation of surface asperities on the surface of the polyolefin-based resin foamed molded product, (c) there is no possibility that the polyolefin-based resin foamed molded product contracts, and wrinkles are generated accordingly on the surface of the polyolefin-based resin foamed molded product, and (d) in a case of the polyolefin-based resin foamed molded product having ridges, the filling property of the polyolefin-based resin expanded particles is favorable, and there is no possibility of the generation of voids, accordingly.

As an example of the internal pressure imparting method applied to the polyolefin-based resin expanded particles, pressurization treatment can be carried out with use of an inorganic gas, in a pressure-resistant vessel filled with the polyolefin-based resin expanded particles. In carrying out this treatment, the inside of the pressure-resistant vessel may be heated as appropriate. The pressure-resistant vessel is not limited to any particular vessel, but is an autoclave-type pressure-resistant vessel, for example. The inorganic gas is, for example, air, nitrogen, argon, or helium, and is preferably air and/or nitrogen, which are low in cost.

The following description will discuss a specific method for preparing a polyolefin-based resin foamed molded product (which can be referred to as "polyolefin-based resin in-mold foamed molded product" from in-mold foam molding of the polyolefin-based resin expanded particles in accordance with an embodiment of the present invention. Examples of the method include the following methods (1) to (7): (1) Subjecting, in advance, the polyolefin-based resin expanded particles to air pressurization treatment (also referred to as air impregnation treatment) in a pressure-resistant vessel, (2) impregnating the polyolefin-based resin expanded particles with air under pressure to impart the ability to expand to the polyolefin-based resin expanded particles, (3) then filling with the polyolefin-based resin expanded particles a molding space which is formed by two molds (a fixed mold and a movable mold) and which is capable of being closed but is not capable of being sealed, (4) molding the polyolefin-based resin expanded particles, with use of steam as a heating medium, under a heating steam pressure of approximately 0.10 MPa to 0.40 MPa, for a heating time of approximately 3 seconds to 30 seconds, (5) fusing the polyolefin-based resin expanded particles together, (6) then water-cooling the molds, and (7) subsequently separating the molds to obtain a polyolefin-based resin in-mold foamed molded product. In a preferred embodiment of the present invention, (a) a pressure of 0.19 MPa to 0.23 MPa is applied to the polyolefin-based resin expanded particles in the air impregnation treatment, (b) the heating steam pressure in the fixed mold differs from that in the movable mold to some extent (e.g., 0.30 MPa in the fixed mold and 0.31 MPa in the movable mold), and (c) the heating time is 20 seconds to 25 seconds. When the heating steam pressure in the fixed mold differs from that in the movable mold, these heating steam pressures can herein be denoted as follows. Heating steam pressure in fixed mold / heating steam pressure in movable mold

The polyolefin-based resin in-mold foamed molded product obtained with use of the polyolefin-based resin expanded particles in accordance with an embodiment of the present invention has a density that is preferably 10 g/L to 150 g/L, more preferably 20 g/L to 100 g/L, and even more preferably 25 g/L to 95 g/L, from the viewpoint of obtaining a product having high flame retardancy.

[Uses]

The polyolefin-based resin foamed molded product thereby obtained is excellent in moldability and flame retardancy, and has a favorable molded product appearance. In addition, the polyolefin-based resin foamed molded product thereby obtained is high in the rate of fusion and meets HF-1 in the UL94 horizontal test for a foamed product (also referred to as "reaching the UL94 HF-1 grade", "passing the UL94 HF-1 test", and "being of the UL94 HF-1 grade", and in addition, is capable of having a high oxygen index. The oxygen index of the polyolefin-based resin foamed molded product is not less than 27.0% in some preferred embodiments of the present invention, not less than 28.0% in a more preferred embodiment, and not less than 30.0% in an even more preferred embodiment. Therefore, the polyolefin-based resin expanded particles and the polyolefin-based resin foamed molded product in accordance with an embodiment of the present invention are capable of satisfying the requirements for an interior decorating material intended for public transportation. The polyolefin-based resin expanded particles and the polyolefin-based resin foamed molded product in accordance with an embodiment of the present invention are therefore suitable for, in particular, the production of a cushion material such as the inner material of seats in high-speed public transportation (such as a high-speed railway and an airplane). Note that, according to international standards, a rail system over 200 km/h and a new rail system reaching 250 km/h are high-speed railways (referred to as *"Gao Tie"*). In China, *"Gao Tie"* (*"G-series High-Speed Train"*) means a railway system which allows the travel with a maximum speed of not less than 200 km/h.

Accordingly, an embodiment of the present invention further provides an interior decorating material for public transportation, for example, a cushion material for high-speed railways, the interior decorating material being produced with use of the above polyolefin-based resin foamed molded product. In other words, an interior decorating material for public transportation in accordance with an embodiment of the present invention includes the polyolefin-based resin foamed molded product described in the section [Polyolefin-based resin foamed molded product]. In an embodiment of the present invention, the inner material of seats for high-speed railways, the inner material being produced from the polyolefin-based resin in-mold foamed molded product in accordance with an embodiment of the present invention passes the horizontal burning test in terms of all of the flame-retardant rating, the oxygen index, the density of smoke, and

the toxicity of smoke. The inner material of seats is capable of satisfying the requirements such as TB/T3237-2010 flame retardant technical conditions of an interior decorating material for high speed trains. Note that an embodiment of the present invention can further include public transportation including the above interior decorating material. In addition, an embodiment of the present invention can further include use of the above interior decorating material in public transportation (in other words, a method for producing the interior decoration of public transportation with use of the above interior decorating material.

An embodiment of the present invention may have the following configurations.

[X1] Polyolefin-based resin expanded particles including: a polyolefin-based resin; an inorganic hypophosphite in an amount of 1.60 parts by weight to 10.00 parts by weight relative to 100 parts by weight of the polyolefin-based resin; and a melamine-based flame retardant in an amount of 0.01 parts by weight to 2.00 parts by weight relative to 100 parts by weight of the polyolefin-based resin.

[X2] The polyolefin-based resin expanded particles described in [X1] in which the polyolefin-based resin expanded particles contain the inorganic hypophosphite in an amount of 1.80 parts by weight to 4.00 parts by weight relative to 100 parts by weight of the polyolefin-based resin.

[X3] The polyolefin-based resin expanded particles described in [X1] or [X2] further including a compound represented by a general formula (1):

$$R^1NHCH_2CH_2CH_2NR^2CH_2CH_2NR^3CH_2CH_2CH_2NHR^4 \qquad (1)$$

(where $R^1$ and $R^2$ are groups represented by a general formula (2):

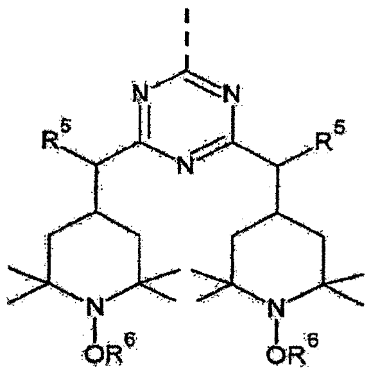

(2)

(where $R^5$ is an alkyl group having 1 to 12 carbon atoms and $R^6$ is a methyl group, a cyclohexyl group or an octyl group), a dashed line above a triazine ring indicated in the general formula (2) represents a bond to a nitrogen atom of the general formula (1),

one of $R^3$ and $R^4$ is a group represented by the general formula (2), a dashed line above a triazine ring indicated in the general formula (2) represents a bond to a nitrogen atom of the general formula (1), and the other of $R^3$ and $R^4$ represents a hydrogen atom),

the polyolefin-based resin expanded particles containing the compound represented by the general formula (1) in an amount of 0.01 parts by weight to 2.00 parts by weight relative to 100 parts by weight of the polyolefin-based resin.

[X4] The polyolefin-based resin expanded particles described in any one of [X1] to [X3] further including one or more bromine-based flame retardants selected from the group consisting of a brominated bisphenol A flame retardant, a brominated bisphenol S flame retardant, a brominated butadiene-styrene block copolymer flame retardant, and a brominated polyphenylene ether flame retardant.

[X5] The polyolefin-based resin expanded particles described in [X4] in which the one or more bromine-based flame retardants include at least one selected from the group consisting of a brominated bisphenol A flame retardant and a brominated bisphenol S flame retardant.

[X6] The polyolefin-based resin expanded particles described in [X4] or [X5] in which the polyolefin-based resin expanded particles contain the one or more bromine-based flame retardants in an amount of 0.10 parts by weight to 5.00 parts by weight relative to 100 parts by weight of the polyolefin-based resin.

[X7] The polyolefin-based resin expanded particles described in any one of [X1] to [X6] further including a radical generating agent.

[X8] The polyolefin-based resin expanded particles described in [X7] in which the radical generating agent includes at least one selected from the group consisting of 2,3-dimethyl-2,3-diphenylbutane and poly-1,4-diisopropylbenzene.
[X9] The polyolefin-based resin expanded particles described in [X7] or [X8] in which the polyolefin-based resin expanded particles contain the radical generating agent in an amount of 0.01 parts by weight to 0.50 parts by weight relative to 100 parts by weight of the polyolefin-based resin.
[X10] The polyolefin-based resin expanded particles described in any one of [X1] to [X9] in which the polyolefin-based resin includes a polypropylene-based resin.
[X11] The polyolefin-based resin expanded particles described in any one of [X1] to [X10] in which the polyolefin-based resin expanded particles have an expanding ratio of 5 times to 45 times.
[X12] A method for producing polyolefin-based resin expanded particles includes the steps of: dispersing polyolefin-based resin particles in an aqueous dispersion medium in a closed vessel and adding a blowing agent to a resultant dispersion slurry; heating an inside of the closed vessel to a temperature not lower than the softening temperature of the polyolefin-based resin particles; and obtaining polyolefin-based resin expanded particles by releasing a resultant mixture into an atmosphere lower in pressure than the inside of the closed vessel to expand the polyolefin-based resin particles, the polyolefin-based resin particles including: a polyolefin-based resin; an inorganic hypophosphite in an amount of 1.60 parts by weight to 10.00 parts by weight relative to 100 parts by weight of the polyolefin-based resin; and a melamine-based flame retardant in an amount of 0.01 parts by weight to 2.00 parts by weight relative to 100 parts by weight of the polyolefin-based resin.
[X13] A polyolefin-based resin foamed molded product prepared by in-mold foam molding of the polyolefin-based resin expanded particles described in any one of [X1] to [X11] or polyolefin-based resin expanded particles obtained by the method for producing polyolefin-based resin expanded particles described in [X12].
[X14] The polyolefin-based resin foamed molded product described in [X13] in which the polyolefin-based resin foamed molded product is of the UL94 HF-1 grade and has an oxygen index of not less than 27.0%.
[X15] An interior decorating material for public transportation including the polyolefin-based resin foamed molded product described in [X13] or [X14].

Examples

The present invention will be described below by discussing Examples and Comparative Examples. However, the present invention is not limited to Examples below.

(Example 1)

[Preparation of polypropylene-based resin particles]

An aluminum hypophosphite flame-retardant master batch (the mass fraction of aluminum hypophosphite (ALHP) was 25 weight%) was obtained by mixing 1.60 parts by weight of ALHP and 4.80 parts by weight of a polypropylene-based resin (propylene/ethylene random copolymer, the ethylene content: 2.2 weight%, MFR: 8.0 g/10 min). A melamine hydrobromide flame-retardant master batch (the mass fraction of melamine hydrobromide (MHB) was 20 weight%) was obtained by mixing 0.06 parts by weight of MHB and 0.24 parts by weight of a polypropylene-based resin (propylene/ethylene random copolymer, the ethylene content: 2.2 weight%, MFR: 8.0 g/10 min.
A mixture was obtained by mixing 94.96 parts by weight of a polypropylene-based resin (propylene/ethylene random copolymer, the ethylene content: 2.2 weight%, MFR: 8.0 g/10 min), the aluminum hypophosphite flame-retardant master batch obtained, the melamine hydrobromide flame-retardant master batch obtained, 0.06 parts by weight of 2,3-dimethyl-2,3-diphenylbutane (radical generating agent, DMDPB), 0.63 parts by weight of carbon black, and 0.87 parts by weight of talc. The mixture obtained was kneaded with use of a twin-screw extruder (the set temperature for extrusion is 200°C at the maximum), and polypropylene-based resin particles were thus obtained. The weight of one polypropylene-based resin particle is 1.0 mg. As to the amount of the polypropylene-based resin used, the sum of the amounts of the polypropylene-based resin contained in the respective master batches and the amounts of the polypropylene-based resin mixed with the respective master batches was 100 parts by weight.

[Preparation of polypropylene-based resin expanded particles]

As a closed vessel, an autoclave having a capacity of 0.01$m^3$ (10L) was used. Into the autoclave, 100 parts by weight of the polypropylene-based resin particles obtained, 200 parts by weight of water, 0.6 parts by weight of basic tricalcium phosphate powder (dispersing agent), and 0.04 parts by weight of an n-sodium alkane sulfonate (dispersion auxiliary agent) were put so that the polyolefin-based resin particles were dispersed in water in the autoclave. While the aqueous dispersion slurry obtained was being stirred, carbon dioxide serving as a blowing agent was introduced into

(added to) this aqueous dispersion slurry. The inside of the autoclave, which is a resultant aqueous dispersion slurry in other words, was heated to an expansion temperature of 155°C, the expansion temperature being not lower than the softening temperature of the polyolefin-based resin particles. By additionally introducing carbon dioxide into the autoclave, the pressure inside the autoclave was increased to an expansion pressure of 1.55 MPa. After that, while the pressure inside the vessel was maintained at the expansion pressure by introducing a nitrogen gas, a valve provided in the lower part of the pressure vessel was opened, so that the mixture (aqueous dispersion slurry) inside the autoclave was released into the atmosphere, which was an ambience lower in pressure than the inside of the autoclave, through an orifice plate having openings which are 3.2 mm in diameter. Polypropylene-based resin expanded particles were thus obtained. As a result of measuring the expanding ratio of the polypropylene-based resin expanded particles obtained, the ratio was 15 times. The results are shown in Table 1.

[Preparation of in-mold foamed molded product]

After the moisture of the polypropylene-based resin expanded particles obtained was removed, an internal pressure of 0.21 MPa (gage pressure) was imparted to the polypropylene-based resin expanded particles in air impregnation treatment. Subsequently, a mold measuring 450 mm length × 350 mm width × 60 mm thickness was filled with the polypropylene-based resin expanded particles to which the internal pressure has been imparted. After that, the polypropylene-based resin expanded particles inside the mold were heated with use of steam as a heating medium, under heating steam pressures of 0.30 MPa (gage pressure)/0.31 MPa (gage pressure) for 22 seconds, so as to be fused together. A block-shape polypropylene-based resin foamed molded product (block-shape molded product) was thus obtained. As a result of evaluating the polypropylene-based resin foamed molded product obtained, no surface asperity was observed and there were few gaps between particles. The in-mold foamed molded product obtained was fractured and the cross section thereof was observed. It was found by the observation that the particles each sufficiently fused with another particle accounted for not less than 60%, and the rate of fusion was therefore excellent.

The in-mold foamed molded product obtained was measured and evaluated in terms of the density, the flame-retardant rating, and the oxygen index of the molded product. The results are shown in Table 2.

(Example 2 to Example 14 and Comparative Example 1 to Comparative Example 7)

[Preparation of polypropylene-based resin particles]

The amounts of ALHP and MHB used were changed as indicated in Table 1, an aluminum hypophosphite flame-retardant master batch (the mass fraction of aluminum hypophosphite was 25 weight%) and a melamine hydrobromide flame-retardant master batch (the mass fraction of MHB was 20 weight%) were produced. The production method was the same as that used in Example 1.

A mixture was obtained by mixing a polypropylene-based resin (propylene/ethylene random copolymer, the ethylene content: 2.2 weight%, MFR: 8.0 g/10 min), the aluminum hypophosphite flame-retardant master batch and the melamine hydrobromide flame-retardant master batch obtained, DMDPB, an optional sterically-hindered amine ether-based flame-retardant compound [FLAMESTAB NOR116FF manufactured by BASF, "NOR116FF" for short] falling under the compound represented by the general formula (1) of the present invention, an optional bromine-based flame retardant (tetrabromobisphenol A-bis(2,3-dibromopropyl)ether (TBAB) or tetrabromobisphenol S-bis(2,3-dibromopropyl)ether (TBSB)), carbon black, and talc. The mixture obtained was kneaded with use of a twin-screw extruder, the temperature for extrusion is set to 200°C at the maximum, and polypropylene-based resin particles were thus obtained. The weight of one polypropylene-based resin particle is 1.0 mg. In order to be better dispersed in the polypropylene-based resin (propylene/ethylene random copolymer), TBAB and TBSB may be individually mixed with a small amount of the polypropylene-based resin (propylene/ethylene random copolymer, the ethylene content: 2.2 weight%, MFR: 8.0 g/10 min) to form flame-retardant master batches (the mass fraction is 20 weight%), and then added to the system. The amount of each of the components is shown in Table 1. Note that the amount of the polypropylene-based resin used for the mixing with the master batches was such an amount that the sum of the amount of the polypropylene-based resin contained in each of the master batches and the amount of the polypropylene-based resin mixed with that master batch was 100 parts by weight.

[Preparation of polypropylene-based resin expanded particles]

As a closed vessel, an autoclave having a capacity of 0.01$m^3$ (10L) was used. Into the autoclave, 100 parts by weight of the polypropylene-based resin particles obtained, 200 parts by weight of water, 0.6 parts by weight of basic tricalcium phosphate powder (dispersing agent), and 0.04 parts by weight of an n-sodium alkane sulfonate (dispersion auxiliary agent) were put so that the polyolefin-based resin particles were dispersed in water in the autoclave. While the

aqueous dispersion slurry obtained was being stirred, carbon dioxide serving as a blowing agent was introduced into (added to) this aqueous dispersion slurry. The inside of the autoclave, which is a resultant aqueous dispersion slurry in other words, was heated to an expansion temperature of 154°C to 160°C, the expansion temperature being not lower than the softening temperature of the polyolefin-based resin particles. By additionally introducing carbon dioxide into the autoclave, the pressure inside the autoclave was increased to an expansion pressure of 1.3 MPa to 2.2 MPa. After that, while the pressure inside the vessel was maintained at the expansion pressure by introducing a nitrogen gas, a valve provided in the lower part of the pressure vessel was opened, so that the mixture (aqueous dispersion slurry) inside the autoclave was released into the atmosphere, which was an ambience lower in pressure than the inside of the autoclave, through an orifice plate having openings which are 3.2 mm in diameter. Polypropylene-based resin expanded particles were thus obtained. The expanding ratio of the polypropylene-based resin expanded particles obtained were measured. The results are shown in Table 1.

[Preparation of in-mold foamed molded product]

After the moisture of the polypropylene-based resin expanded particles obtained was removed, an internal pressure of 0.21 MPa (gage pressure) was imparted to the polypropylene-based resin expanded particles in air impregnation treatment. Subsequently, a mold measuring 450 mm length × 350 mm width × 60 mm thickness was filled with the polypropylene-based resin expanded particles to which the internal pressure has been imparted. After that, the polypropylene-based resin expanded particles inside the mold were heated with use of steam as a heating medium, under heating steam pressures of 0.30 MPa (gage pressure)/0.31 MPa (gage pressure) for 22 seconds, so as to be fused together. A block-shape polypropylene-based resin foamed molded product (block-shape molded product) was thus obtained. As a result of evaluating the polypropylene-based resin foamed molded product obtained, no surface asperity was observed and there were few gaps between particles. The in-mold foamed molded product obtained was fractured and the cross section thereof was observed. It was found by the observation that the particles each sufficiently fused with another particle accounted for not less than 60%, and the rate of fusion was therefore excellent.
The in-mold foamed molded product obtained was measured and evaluated in terms of the density, the flame-retardant rating, and the oxygen index of the molded product. The results are shown in Table 2.

(Comparative Example 8 and Comparative Example 9)

[Preparation of polypropylene-based resin particles]

A mixture was obtained by mixing: 100 parts by weight of the polypropylene-based resin (propylene/ethylene random copolymer, the ethylene content: 2.2 weight%, MFR: 8.0 g/10 min); a sterically-hindered amine ether-based flame-retardant compound (NOR116FF) falling under the compound represented by the general formula (1) of the present invention and in an amount described in Table 1; ammonium polyphosphate (APP); carbon black; and talc. The mixture obtained was kneaded with use of a twin-screw extruder, the temperature for extrusion is set to 200°C at the maximum, and polypropylene-based resin particles were thus obtained. The weight of one polypropylene-based resin particle is 1.0 mg.

[Preparation of polypropylene-based resin expanded particles]

By the same method that was used in the above Examples, the polypropylene-based resin expanded particles were obtained. The expanding ratio of the polypropylene-based resin expanded particles was measured. The results are shown in Table 1

[Preparation of in-mold foamed molded product]

By the same method that was used in the above Examples. a block-shape polypropylene-based resin foamed molded product (block-shape molded product) was obtained. As a result of evaluating the polypropylene-based resin foamed molded product obtained, no surface asperity was observed and there were few gaps between particles. The in-mold foamed molded product obtained was fractured and the cross section thereof was observed. It was found by the observation that the particles each sufficiently fused with another particle accounted for not less than 60%, and the rate of fusion was therefore excellent.
The in-mold foamed molded product obtained was measured and evaluated in terms of the density, the flame-retardant rating, and the oxygen index of the molded product. The results are shown in Table 2.
Examples and Comparative Examples were evaluated as follows.

(Rate of fusion)

A 5 mm-deep cut was made at the surface of the foamed molded product. After that, the foamed molded product was broken up along the cut at the portion surrounding the cut. The visual observation of the fracture cross section of the foamed molded product obtained was made, and the proportion (B/A×100) of "the number (B), in the fracture cross section, of expanded particles the insides of which, not the interfaces between which, are fractured" to "the total number (A) of expanded particles in the fracture cross section" was determined. The determined value was used as the rate of fusion. The fusibility was judged from the rate of fusion. Specifically, a rate of fusion of not less than 60% is judged to be passed.

(Expanding ratio)

The weight W (g) of the polyolefin-based resin expanded particle and the volume V ($cm^3$) of the polyolefin-based resin particle submerged in ethanol were determined. With the density d ($g/cm^3$) of the polyolefin-based resin expanded particle before expansion, the expanding ratio was determined from the following formula.

$$\text{Expanding ratio} = d \times V / W$$

(Density of in-mold foamed molded product)

The apparent density MD (g/L) of the in-mold foamed molded product was calculated by dividing the weight $W_2$ (g) of the foamed molded product by the volume $V_2$ (L) of the foamed molded product.

$$MD = W_2 / V_2$$

(Flame-retardant rating)

After measurement and evaluation were carried out in accordance with the UL94 "horizontal burning test for foamed material", the flame-retardant rating was evaluated on the basis of the following criteria. In Table 2, the flame-retardant rating results are shown in the "HF-1 test" column.

Exc (Excellent): HF-1 Pass
Good (Favorable): HF-2 Pass
Poor (Faulty): HF NG
(Oxygen index)
GB/T 2406.2-2009 was adhered to. In the measurement, the in-mold foamed molded product was peeled so that 15 to 30 sample strips each measuring 80 mm to 150 mm × 10 mm × 10 mm were cut from the in-mold foamed molded product. After the sample strips were conditioned at 23°C, at 50%RH and for at least 88 hours, the oxygen indices thereof were measured, and the final results were determined by the up-and-down method. In Table 2, the oxygen index results are shown in the "OI" column.

As shown in Tables 1 and 2, Comparative Example 1 did not pass the HF-1 test because the aluminum hypophosphite content thereof was too low. Comparative Examples 2 and 3 passed the HF-1 test, but the oxygen indices thereof were low because aluminum hypophosphite fell below the specified range of the present invention. In comparison with Comparative Example 1, Comparative Example 4 included the compound represented by the general formula (1) of the present invention. However, Comparative Example 4 did not reach the HF-1 grade, and the oxygen index thereof, on the contrary, was somewhat lower than that of Comparative Example 1. To Comparative Examples 5 to 7, MHB was not added. Comparative Example 5 did not reach the HF-1 grade, and furthermore, the oxygen index thereof was low. Comparative Example 6 and Comparative Example 7 reached the HF-1 grade, but the oxygen indices thereof did not reach 27.0%. Comparative Examples 8 and 9 contained ammonium polyphosphate flame retardant and the compound represented by the general formula (1). These Comparative Examples yielded block-shape molded products having surface appearance and a rate of fusion that satisfied predetermined requirements, but did not pass the UF94 "horizontal burning test for foamed material". It is obvious from Examples 1 to 14 that what provides a polyolefin-based resin in-mold foamed molded product which has the HF-1 flame-retardant rating and a high oxygen index while maintaining moldability is the flame retardant composition having a particular mixture ratio specified in an embodiment of the present invention.

[Table 1]

(Table 1)

| | Polypropylene-based resin expanded particles | | | | | | | | | | |
|---|---|---|---|---|---|---|---|---|---|---|---|
| | Composition | | | | | | | | | | Physical property |
| | Polypropylene-based resin | ALHP | MHB | DMDPB | NOR116 FF | TBAB | TBSB | APP | Carbon black | Talc | Expanding ratio |
| | Parts by weight | Parts by weight | Parts by weight | Parts by weight | Parts by weight | Parts by weight | Parts by weight | Parts by weight | Parts by weight | Parts by weight | Times |
| Comparative Example 1 | 100 | 1.08 | 0.23 | 0.08 | - | - | - | - | 0.62 | 0.85 | 17.1 |
| Comparative Example 2 | 100 | 1.34 | 0.29 | 0.10 | - | - | - | - | 0.62 | 0.86 | 20.4 |
| Comparative Example 3 | 100 | 1.40 | 0.05 | 0.05 | - | - | - | - | 0.62 | 0.86 | 15.0 |
| Example 1 | 100 | 1.60 | 0.06 | 0.06 | - | - | - | - | 0.63 | 0.87 | 15.0 |
| Example 2 | 100 | 2.14 | 0.08 | 0.08 | - | - | - | - | 0.62 | 0.86 | 15.5 |
| Example 3 | 100 | 2.66 | 0.10 | 0.10 | - | - | - | - | 0.63 | 0.87 | 10.0 |
| Example 4 | 100 | 2.66 | 0.10 | 0.10 | - | - | - | - | 0.63 | 0.87 | 16.5 |
| Example 5 | 100 | 2.66 | 0.10 | 0.10 | - | - | - | - | 0.63 | 0.87 | 35.7 |
| Example 6 | 100 | 3.53 | 0.14 | 0.14 | - | - | - | - | 0.63 | 0.87 | 25.2 |
| Comparative Example 4 | 100 | 1.08 | 0.23 | 0.08 | 1.04 | - | - | - | 0.62 | 0.86 | 17.5 |
| Example 7 | 100 | 2.14 | 0.08 | 0.08 | 0.26 | - | - | - | 0.63 | 0.87 | 14.2 |
| Example 8 | 100 | 2.14 | 0.08 | 0.08 | 0.52 | - | - | - | 0.63 | 0.87 | 20.5 |
| Example 9 | 100 | 2.14 | 0.08 | 0.08 | 1.05 | - | - | - | 0.63 | 0.87 | 21.8 |
| Example 10 | 100 | 2.14 | 0.08 | 0.08 | - | 1.05 | - | - | 0.63 | 0.87 | 13.7 |
| Example 11 | 100 | 2.14 | 0.08 | 0.08 | - | 1.05 | - | - | 0.63 | 0.87 | 18.2 |
| Example 12 | 100 | 2.14 | 0.08 | 0.08 | - | - | 0.26 | - | 0.62 | 0.86 | 19.7 |
| Example 13 | 100 | 2.14 | 0.08 | 0.08 | - | - | 0.52 | - | 0.63 | 0.87 | 16.4 |
| Example 14 | 100 | 2.14 | 0.08 | 0.08 | - | - | 1.05 | - | 0.63 | 0.87 | 16.7 |
| Comparative Example 5 | 100 | 2.66 | | | | | | | 0.62 | 0.86 | 29.0 |
| Comparative Example 6 | 100 | 2.67 | | | | 0.52 | | | 0.63 | 0.87 | 21.0 |

(continued)

| | Polypropylene-based resin expanded particles | | | | | | | | | | |
|---|---|---|---|---|---|---|---|---|---|---|---|
| | Composition | | | | | | | | | | Physical property |
| | Polypropylene -based resin | ALHP | MHB | DMDPB | NOR116 FF | TBAB | TBSB | APP | Carbon black | Talc | Expanding ratio |
| | Parts by weight | Parts by weight | Parts by weight | Parts by weight | Parts by weight | Parts by weight | Parts by weight | Parts by weight | Parts by weight | Parts by weight | Times |
| Comparative Example 7 | 100 | 2.67 | | 0.10 | | 0.52 | | | 0.63 | 0.87 | 18.3 |
| Comparative Example 8 | 100 | - | - | - | 0.52 | - | - | 2.1 | 0.62 | 0.86 | 16.0 |
| Comparative Example 9 | 100 | - | - | - | 1.05 | - | - | 2.1 | 0.62 | 0.87 | 16.7 |

(Table 2)

| | Block-shape molded product (Polypropylene-based resin foamed molded product) | | |
|---|---|---|---|
| | Physical properties | | |
| | Density of molded product | HF-1 test | Oxygen index |
| | g/L | - | % |
| Comparative Example 1 | 53 | HF-2 | 26.7 |
| Comparative Example 2 | 45 | HF-1 | 26.2 |
| Comparative Example 3 | 60 | HF-1 | 26.0 |
| Example 1 | 60 | HF-1 | 27.0 |
| Example 2 | 56 | HF-1 | 28.0 |
| Example 3 | 90 | HF-1 | 28.3 |
| Example 4 | 56 | HF-1 | 29.3 |
| Example 5 | 26 | HF-1 | 30.7 |
| Example 6 | 36 | HF-1 | 29.7 |
| Comparative Example 4 | 53 | HF-2 | 25.2 |
| Example 7 | 64 | HF-1 | 28.0 |
| Example 8 | 45 | HF-1 | 28.1 |
| Example 9 | 45 | HF-1 | 27.3 |
| Example 10 | 66 | HF-1 | 29.1 |
| Example 11 | 45 | HF-1 | 29.6 |
| Example 12 | 46 | HF-1 | 28.8 |
| Example 13 | 55 | HF-1 | 29.5 |
| Example 14 | 56 | HF-1 | 30.2 |
| Comparative Example 5 | 39 | HF-2 | 22.9 |
| Comparative Example 6 | 49 | HF-1 | 26.6 |
| Comparative Example 7 | 55 | HF-1 | 26.5 |
| Comparative Example 8 | 56 | HF NG | 22.2 |
| Comparative Example 9 | 53 | HF NG | 22.2 |

Industrial Applicability

According to an embodiment of the present invention, it is possible to provide novel polyolefin-based resin expanded particles and a novel polyolefin-based resin foamed molded product that are excellent in flame retardancy. It is therefore possible to suitably use the polyolefin-based resin expanded particles and the polyolefin-based resin foamed molded product in accordance with an embodiment of the present invention as, in particular, the interior decorating material for public transportation (e.g., high-speed public transportation (e.g., high-speed railways and airplanes)).

## Claims

**1.** Polyolefin-based resin expanded particles comprising:

a polyolefin-based resin;
an inorganic hypophosphite in an amount of 1.60 parts by weight to 10.00 parts by weight relative to 100 parts by weight of the polyolefin-based resin; and
a melamine-based flame retardant in an amount of 0.01 parts by weight to 2.00 parts by weight relative to 100

parts by weight of the polyolefin-based resin.

**2.** The polyolefin-based resin expanded particles according to claim 1, wherein the polyolefin-based resin expanded particles contain the inorganic hypophosphite in an amount of 1.80 parts by weight to 4.00 parts by weight relative to 100 parts by weight of the polyolefin-based resin.

**3.** The polyolefin-based resin expanded particles according to claim 1 or 2, further comprising a compound represented by a general formula (1):

$$R^1NHCH_2CH_2CH_2NR^2CH_2CH_2NR^3CH_2CH_2CH_2NHR^4 \qquad (1)$$

(where $R^1$ and $R^2$ are groups represented by a general formula (2):

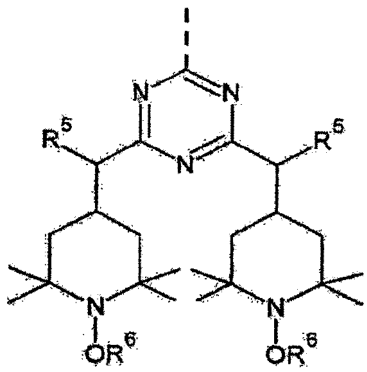

(2)

(where $R^5$ is an alkyl group having 1 to 12 carbon atoms and $R^6$ is a methyl group, a cyclohexyl group or an octyl group), a dashed line above a triazine ring indicated in the general formula (2) represents a bond to a nitrogen atom of the general formula (1),
one of $R^3$ and $R^4$ is a group represented by the general formula (2), a dashed line above a triazine ring indicated in the general formula (2) represents a bond to a nitrogen atom of the general formula (1), and the other of $R^3$ and $R^4$ represents a hydrogen atom),
the polyolefin-based resin expanded particles containing the compound represented by the general formula (1) in an amount of 0.01 parts by weight to 2.00 parts by weight relative to 100 parts by weight of the polyolefin-based resin.

**4.** The polyolefin-based resin expanded particles according to any one of claims 1 to 3, further comprising one or more bromine-based flame retardants selected from the group consisting of a brominated bisphenol A flame retardant, a brominated bisphenol S flame retardant, a brominated butadiene-styrene block copolymer flame retardant, and a brominated polyphenylene ether flame retardant.

**5.** The polyolefin-based resin expanded particles according to claim 4, wherein the one or more bromine-based flame retardants include at least one selected from the group consisting of a brominated bisphenol A flame retardant and a brominated bisphenol S flame retardant.

**6.** The polyolefin-based resin expanded particles according to claim 4 or 5, wherein the polyolefin-based resin expanded particles contain the one or more bromine-based flame retardants in an amount of 0.10 parts by weight to 5.00 parts by weight relative to 100 parts by weight of the polyolefin-based resin.

**7.** The polyolefin-based resin expanded particles according to any one of claims 1 to 6, further comprising a radical generating agent.

**8.** The polyolefin-based resin expanded particles according to claim 7, wherein the radical generating agent includes at least one selected from the group consisting of 2,3-dimethyl-2,3-diphenylbutane and poly-1,4-diisopropylbenzene.

**9.** The polyolefin-based resin expanded particles according to claim 7 or 8, wherein

the polyolefin-based resin expanded particles contain the radical generating agent in an amount of 0.01 parts by weight to 0.50 parts by weight relative to 100 parts by weight of the polyolefin-based resin.

**10.** The polyolefin-based resin expanded particles according to any one of claims 1 to 9, wherein the polyolefin-based resin includes a polypropylene-based resin.

**11.** The polyolefin-based resin expanded particles according to any one of claims 1 to 10, wherein the polyolefin-based resin expanded particles have an expanding ratio of 5 times to 45 times.

**12.** A method for producing polyolefin-based resin expanded particles comprising the steps of:

dispersing polyolefin-based resin particles in an aqueous dispersion medium in a closed vessel and adding a blowing agent to a resultant dispersion slurry;
heating an inside of the closed vessel to a temperature not lower than the softening temperature of the polyolefin-based resin particles; and
obtaining polyolefin-based resin expanded particles by releasing a resultant mixture into an atmosphere lower in pressure than the inside of the closed vessel to expand the polyolefin-based resin particles,
the polyolefin-based resin particles including: a polyolefin-based resin; an inorganic hypophosphite in an amount of 1.60 parts by weight to 10.00 parts by weight relative to 100 parts by weight of the polyolefin-based resin; and a melamine-based flame retardant in an amount of 0.01 parts by weight to 2.00 parts by weight relative to 100 parts by weight of the polyolefin-based resin.

**13.** A polyolefin-based resin foamed molded product prepared by in-mold foam molding of the polyolefin-based resin expanded particles according to any one of claims 1 to 11 or polyolefin-based resin expanded particles obtained by the method for producing polyolefin-based resin expanded particles according to claim 12.

**14.** The polyolefin-based resin foamed molded product according to claim 13, wherein the polyolefin-based resin foamed molded product is of the UL94 HF-1 grade and has an oxygen index of not less than 27.0%.

**15.** An interior decorating material for public transportation comprising the polyolefin-based resin foamed molded product according to claim 13 or 14.

## Patentansprüche

**1.** Expandierte Partikel mit Harz auf Polyolefinbasis, umfassend:

ein Harz auf Polyolefinbasis;
ein anorganisches Hypophosphit in einer Menge von 1,60 Gewichtsteilen bis 10,00 Gewichtsteilen, bezogen auf 100 Gewichtsteile des Harzes auf Polyolefinbasis; und
ein Flammschutzmittel auf Melaminbasis in einer Menge von 0,01 Gewichtsteilen bis 2,00 Gewichtsteilen, bezogen auf 100 Gewichtsteile des Harzes auf Polyolefinbasis.

**2.** Die expandierten Partikel mit Harz auf Polyolefinbasis nach Anspruch 1, wobei die expandierten Partikel mit Harz auf Polyolefinbasis das anorganische Hypophosphit in einer Menge von 1,80 Gewichtsteilen bis 4,00 Gewichtsteilen, bezogen auf 100 Gewichtsteile des Harzes auf Polyolefinbasis, enthalten.

**3.** Die expandierten Partikel mit Harz auf Polyolefinbasis nach Anspruch 1 oder 2, ferner umfassend eine durch eine allgemeine Formel (1) dargestellte Verbindung:

$$R^1NHCH_2CH_2CH_2NR^2CH_2CH_2NR^3CH_2CH_2CH_2NHR^4 \quad (1)$$

(wobei $R^1$ und $R^2$ durch eine allgemeine Formel (2) dargestellte Gruppen sind:

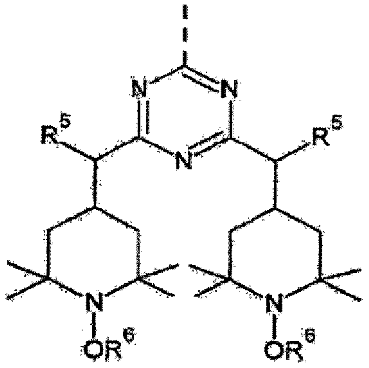

(2)

(wobei $R^5$ eine Alkylgruppe mit 1 bis 12 Kohlenstoffatomen ist und $R^6$ eine Methylgruppe, eine Cyclohexylgruppe oder eine Octylgruppe ist), eine gestrichelte Linie über einem in der allgemeinen Formel (2) angegebenen Triazinring eine Bindung an ein Stickstoffatom der allgemeinen Formel (1) darstellt,
eine von $R^3$ und $R^4$ eine durch die allgemeine Formel (2) dargestellte Gruppe ist, eine gestrichelte Linie über einem in der allgemeinen Formel (2) angegebenen Triazinring eine Bindung an ein Stickstoffatom der allgemeinen Formel (1) darstellt und die andere von $R^3$ und $R^4$ ein Wasserstoffatom darstellt),
wobei die expandierten Partikel mit Harz auf Polyolefinbasis die durch die allgemeine Formel (1) dargestellte Verbindung in einer Menge von 0,01 Gewichtsteilen bis 2,00 Gewichtsteilen, bezogen auf 100 Gewichtsteile des Harzes auf Polyolefinbasis, enthalten.

**4.** Die expandierten Partikel mit Harz auf Polyolefinbasis nach einem der Ansprüche 1 bis 3, ferner umfassend ein oder mehrere Flammschutzmittel auf Brombasis, ausgewählt aus der Gruppe bestehend aus einem bromierten Bisphenol-A-Flammschutzmittel, einem bromierten Bisphenol-S-Flammschutzmittel, einem bromierten Butadien-Styrol-Blockcopolymer-Flammschutzmittel und einem bromierten Polyphenylenether-Flammschutzmittel.

**5.** Die expandierten Partikel mit Harz auf Polyolefinbasis nach Anspruch 4, wobei das eine oder die mehreren Flammschutzmittel auf Brombasis mindestens eines, ausgewählt aus der Gruppe bestehend aus einem bromierten Bisphenol-A-Flammschutzmittel und einem bromierten Bisphenol-S-Flammschutzmittel, beinhalten.

**6.** Die expandierten Partikel mit Harz auf Polyolefinbasis nach Anspruch 4 oder 5, wobei die expandierten Partikel mit Harz auf Polyolefinbasis das eine oder die mehreren Flammschutzmittel auf Brombasis in einer Menge von 0,10 Gewichtsteilen bis 5,00 Gewichtsteilen, bezogen auf 100 Gewichtsteile des Harzes auf Polyolefinbasis, enthalten.

**7.** Die expandierten Partikel mit Harz auf Polyolefinbasis nach einem der Ansprüche 1 bis 6, ferner umfassend ein Radikalbildemittel.

**8.** Die expandierten Partikel mit Harz auf Polyolefinbasis nach Anspruch 7, wobei das Radikalbildemittel mindestens eines, ausgewählt aus der Gruppe bestehend aus 2,3-Dimethyl-2,3-diphenylbutan und Poly-1,4-diisopropylbenzol, beinhaltet.

**9.** Die expandierten Partikel mit Harz auf Polyolefinbasis nach Anspruch 7 oder 8, wobei die expandierten Partikel mit Harz auf Polyolefinbasis das Radikalbildemittel in einer Menge von 0,01 Gewichtsteilen bis 0,50 Gewichtsteilen, bezogen auf 100 Gewichtsteile des Harzes auf Polyolefinbasis, enthalten.

**10.** Die expandierten Partikel mit Harz auf Polyolefinbasis nach einem der Ansprüche 1 bis 9, wobei das Harz auf Polyolefinbasis ein Harz auf Polypropylenbasis beinhaltet.

**11.** Die expandierten Partikel mit Harz auf Polyolefinbasis nach einem der Ansprüche 1 bis 10, wobei die expandierten Partikel mit Harz auf Polyolefinbasis ein 5-faches bis 45-faches Expansionsverhältnis aufweisen.

**12.** Ein Verfahren zur Herstellung von expandierten Partikeln mit Harz auf Polyolefinbasis, umfassend die Schritte:

Dispergieren von Partikeln mit Harz auf Polyolefinbasis in einem wässrigen Dispersionsmedium in einem geschlossenen Behälter und Zugabe eines Treibmittels zu einer resultierenden Dispersionsaufschlämmung;
Erwärmen eines Inneren des geschlossenen Behälters auf eine Temperatur, die nicht niedriger als die Erweichungstemperatur der Partikel mit Harz auf Polyolefinbasis ist; und
Erhalt expandierter Partikel mit Harz auf Polyolefinbasis durch Freisetzen eines resultierenden Gemischs in eine Atmosphäre mit niedrigerem Druck als dem des Inneren des geschlossenen Behälters, um die Partikel mit Harz auf Polyolefinbasis zu expandieren,
wobei die Partikel mit Harz auf Polyolefinbasis beinhalten: ein Harz auf Polyolefinbasis; ein anorganisches Hypophosphit in einer Menge von 1,60 Gewichtsteilen bis 10,00 Gewichtsteilen, bezogen auf 100 Gewichtsteile des Harzes auf Polyolefinbasis; und ein Flammschutzmittel auf Melaminbasis in einer Menge von 0,01 Gewichtsteilen bis 2,00 Gewichtsteilen, bezogen auf 100 Gewichtsteile des Harzes auf Polyolefinbasis.

**13.** Ein geschäumtes Formprodukt mit Harz auf Polyolefinbasis, hergestellt durch In-Mould-Schäumen der expandierten Partikel mit Harz auf Polyolefinbasis nach einem der Ansprüche 1 bis 11 oder der expandierten Partikel mit Harz auf Polyolefinbasis, die durch das Verfahren zur Herstellung expandierter Partikel mit Harz auf Polyolefinbasis nach Anspruch 12 erhalten sind.

**14.** Das geschäumte Formprodukt mit Harz auf Polyolefinbasis nach Anspruch 13, wobei
das geschäumte Formprodukt mit Harz auf Polyolefinbasis der UL94 HF-1-Klasse angehört und einen Sauerstoffindex von nicht weniger als 27,0% aufweist.

**15.** Ein Innenausstattungsmaterial für öffentliche Verkehrsmittel, umfassend
das geschäumte Formprodukt mit Harz auf Polyolefinbasis nach Anspruch 13 oder 14.

**Revendications**

**1.** Particules expansées de résine à base de polyoléfine comprenant :

une résine à base de polyoléfine ;
un hypophosphite inorganique en une quantité de 1,60 parties en poids à 10,00 parties en poids par rapport à 100 parties en poids de la résine à base de polyoléfine ; et
un agent ignifugeant à base de mélamine en une quantité de 0,01 partie en poids à 2,00 parties en poids par rapport à 100 parties en poids de la résine à base de polyoléfine.

**2.** Particules expansées de résine à base de polyoléfine selon la revendication 1, dans lesquelles :
les particules expansées de résine à base de polyoléfine contiennent de l'hypophosphite inorganique en une quantité de 1,80 parties en poids à 4,00 parties en poids par rapport à 100 parties en poids de la résine à base de polyoléfine.

**3.** Particules expansées de résine à base de polyoléfine selon la revendication 1 ou 2, comprenant en outre
un composé représenté par une formule générale (1) :

$$R^1NHCH_2CH_2CH_2NR^2CH_2CH_2NR^3CH_2CH_2CH_2NHR^4 \qquad (1)$$

(dans laquelle $R^1$ et $R^2$ sont des groupes représentés par une formule générale (2) :

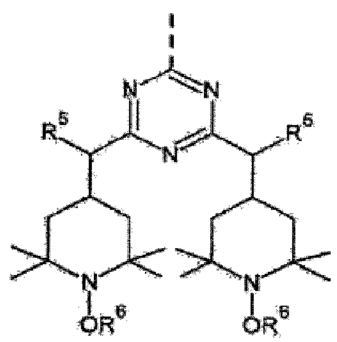

(2)

(dans laquelle $R^5$ est un groupe alkyle ayant de 1 à 12 atomes de carbone et $R^6$ est un groupe méthyle, un groupe cyclohexyle ou un groupe octyle), la ligne en pointillés au-dessus du cycle triazine indiquée dans la formule générale (2) représente une liaison à un atome d'azote de la formule générale (1),
l'un parmi $R^3$ et $R^4$ est un groupe représenté par la formule générale (2), la ligne en pointillés au-dessus du cycle triazine indiquée dans la formule générale (2) représente une liaison à un atome d'azote de la formule générale (1), et l'autre parmi $R^3$ et $R^4$ représente un atome d'hydrogène),
les particules expansées de résine à base de polyoléfine contenant le composé représenté par la formule générale (1) en une quantité de 0,01 partie en poids à 2,00 parties en poids par rapport à 100 parties en poids de la résine à base de polyoléfine.

**4.** Particules expansées de résine à base de polyoléfine selon l'une quelconque des revendications 1 à 3, comprenant en outre
un ou plusieurs agents ignifugeants à base de brome choisis dans le groupe constitué par un agent ignifugeant de bisphénol A bromé, un agent ignifugeant de bisphénol S bromé, un agent ignifugeant de copolymère à blocs de butadiène-styrène bromé, et un agent ignifugeant de polyphénylène éther bromé.

**5.** Particules expansées de résine à base de polyoléfine selon la revendication 4, dans lesquelles
le ou les agents ignifugeants à base de brome comprennent au moins un élément choisi dans le groupe constitué par un agent ignifugeant de bisphénol A bromé et un agent ignifugeant de bisphénol S bromé.

**6.** Particules expansées de résine à base de polyoléfine selon la revendication 4 ou 5, dans lesquelles
les particules expansées de résine à base de polyoléfine contiennent le un les agents ignifugeants à base de brome en une quantité de 0,10 partie en poids à 5,00 parties en poids par rapport à 100 parties en poids de la résine à base de polyoléfine.

**7.** Particules expansées de résine à base de polyoléfine selon l'une quelconque des revendications 1 à 6, comprenant en outre
un agent générant des radicaux.

**8.** Particules expansées de résine à base de polyoléfine selon la revendication 7, dans lesquelles
l'agent générant des radicaux comprend au moins un élément choisi dans le groupe constitué par le 2,3-diméthyl-2,3-diphénylbutane et le poly-1,4-diisopropylbenzène.

**9.** Particules expansées de résine à base de polyoléfine selon la revendication 7 ou 8, dans lesquelles
les particules expansées de résine à base de polyoléfine contiennent l'agent générant des radicaux en une quantité de 0,01 partie en poids à 0,50 partie en poids par rapport à 100 parties en poids de la résine à base de polyoléfine.

**10.** Particules expansées de résine à base de polyoléfine selon l'une quelconque des revendications 1 à 9, dans lesquelles
la résine à base de polyoléfine comprend une résine à base de polypropylène.

**11.** Particules expansées de résine à base de polyoléfine selon l'une quelconque des revendications 1 à 10, dans lesquelles
les particules expansées de résine à base de polyoléfine ont un rapport d'expansion de 5 fois à 45 fois.

**12.** Méthode de production de particules expansées de résine à base de polyoléfine, comprenant les étapes de :

dispersion des particules de résine à base de polyoléfine dans un milieu de dispersion aqueux dans un récipient fermé et ajout d'un agent d'expansion à une bouillie de dispersion résultante ;
chauffage de l'intérieur du récipient fermé à une température qui n'est pas inférieure à la température de ramollissement des particules de résine à base de polyoléfine ; et
obtention des particules expansées de résine à base de polyoléfine par libération d'un mélange résultant dans une atmosphère dont la pression est inférieure à celle de l'intérieur du récipient fermé afin d'expanser les particules de résine à base de polyoléfine,
les particules de résine à base de polyoléfine comprenant : une résine à base de polyoléfine ; un hypophosphite inorganique en une quantité de 1,60 parties en poids à 10,00 parties en poids par rapport à 100 parties en poids de la résine à base de polyoléfine ; et un agent ignifugeant à base de mélamine en une quantité de 0,01 partie en poids à 2,00 parties en poids par rapport à 100 parties en poids de la résine à base de polyoléfine.

13. Produit moulé en mousse de résine à base de polyoléfine préparé par le moulage d'une mousse en moule des particules expansées de résine à base de polyoléfine selon l'une quelconque des revendications 1 à 11 ou des particules expansées de résine à base de polyoléfine obtenues par la méthode de production de particules expansées de résine à base de polyoléfine selon la revendication 12.

14. Produit moulé en mousse de résine à base de polyoléfine selon la revendication 13, dans lequel le produit moulé en mousse de résine à base de polyoléfine est de qualité UL94 HF-1 et a un indice d'oxygène qui n'est pas inférieur à 27,0 %.

15. Matériau de décoration d'intérieur pour les transports publics comprenant le produit moulé en mousse de résine à base de polyoléfine selon la revendication 13 ou 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2003048239 A1
- JP 2004263033 A
- JP 9227711 A
- WO 2010119670 A1
- WO 2013022049 A1
- WO 2016052739 A1
- CN 105694221 A
- CN 111234373 A
- GB T240622009 A


### Non-patent literature cited in the description


- *CHEMICAL ABSTRACTS*, 84962-53-8
- *CHEMICAL ABSTRACTS*, 218768-84-4
- *CHEMICAL ABSTRACTS*, 37640-57-6
- *CHEMICAL ABSTRACTS*, 15541-60-3
- *CHEMICAL ABSTRACTS*, 29305-12-2